(19) Europäisches Patentamt
European Patent Office
Office européen des brevets

(11) **EP 4 467 936 A1**

(12) **EUROPEAN PATENT APPLICATION**
published in accordance with Art. 153(4) EPC

(43) Date of publication:
**27.11.2024 Bulletin 2024/48**

(21) Application number: **23743344.6**

(22) Date of filing: **20.01.2023**

(51) International Patent Classification (IPC):
**G01D 21/00** (2006.01)

(52) Cooperative Patent Classification (CPC):
**G01D 21/00; G01D 21/02; G05D 1/02**

(86) International application number:
**PCT/JP2023/001701**

(87) International publication number:
**WO 2023/140352 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2022 CN 202210065118
20.01.2022 CN 202210065536**

(71) Applicant: **DAIKIN INDUSTRIES, LTD.**
**Osaka-shi, Osaka 530-0001 (JP)**

(72) Inventors:
• **PAN, Si**
**Osaka-shi, Osaka 530-0001 (JP)**
• **JIANG, Lan**
**Osaka-shi, Osaka 530-0001 (JP)**

(74) Representative: **Conti, Marco**
**Bugnion S.p.A.**
**Via di Corticella, 87**
**40128 Bologna (IT)**

(54) **COLLECTION EQUIPMENT CONTROL METHOD, COLLECTION EQUIPMENT, AND SPACE SYSTEM**

(57) The present application provides a collection device control method, a collection device, and a spatial system. The collection device includes an acquisition device that acquires information inside a space of a target region, a control device that sets a detection path for a collection device based on an unreachable region within the space of the target region, and a detection device that acquires environmental data including environmental data of the unreachable region detected when the collection device moves along the detection path in the space of the target region. This allows the collection device to detect environmental data of the unreachable region.

FIG. 1

## Description

Technical Field

The present application relates to the field of information technology, and in particularly to a collection device control method, a collection device, and a spatial system.

Background Art

In a case where environmental data is to be detected, a collection device is moved along a predetermined path, and after having moved to a predetermined location, the collection device performs its detection, which allows environmental data at that location to be acquired. Environmental data may be parameters such as air quality, dust particle concentration, temperature, humidity, for example.

It is to be noted that the above-described explanation of the technical background is provided solely to facilitate a clear and complete description of the technical solution of the present application and to aid the understanding of those skilled in the art. The above-described technical solutions are not assumed to be known to those skilled in the art solely because they are described in the background technology section of the present application.

Summary of Invention

The inventor of the present application has found that in a case where environmental data inside the space of a target region is to be detected using a collection device, there may be a case where the collection device cannot reach some region, the unreachable region may be smaller than the size of the collection device, such as some corner, a region above a cabinet, a region behind a television, or an obstacle and a region in the surrounding area of the unreachable region in the space, for example, and it is difficult to detect environmental data of the region where a collection device cannot reach.

In order to solve at least the above-described technical issues or technical issues similar thereto, examples of the present application provide a collection device control method, a collection device, and a spatial system that can detect environmental data of a region where a collection device cannot reach by setting a detection path for a collection device on the basis of an unreachable region and calculating environmental data of the unreachable region.

According to an aspect of examples of the present application, a collection device control method is provided that includes

acquiring information inside a space of a target region,

setting a detection path for a collection device based on an unreachable region within the space of the target region, and

acquiring environmental data including environmental data of the unreachable region detected when the collection device moves along the detection path in the space of the target region.

According to another aspect of the examples of the present application, a collection device is provided that includes

an acquisition device that acquires information inside a space of a target region,

a control device that sets a detection path based on an unreachable region within the space of the target region, and

a detection device that acquires environmental data including environmental data of the unreachable region detected when the collection device moves along the detection path in the space of the target region.

An advantageous effect of the examples of the present application is that the detection path for the collection device is set on the basis of the unreachable region, and the environmental data of the unreachable region is calculated, thereby allowing the environmental data of the region where the collection device cannot reach to be detected.

With reference to the following description and the drawings, certain embodiments of the present application are disclosed in detail, and aspects where the principles of the present application may be employed are clearly stated. It is to be understood that this does not limit the embodiments of the present application in terms of scope. Within the terms of the appended claims, the embodiments of the present application include many changes, modifications, and equivalents.

For features described and/or indicated in one embodiment, the features can be used in one or more other embodiments in the same or similar manner, can be combined with features of other embodiments, or can substitute for features of other embodiments.

In a case where the term "including/include" is used in the text of the document, the term refers to features, the entirety of members, steps, or the presence of members, but it needs to be emphasized that the term does not exclude the presence/addition of one or more other features, the entirety of one or more other members, one or more other steps, or one or more other members.

Brief Description of Drawings

Components and features described in one drawing of an example or one type of embodiment of the present application can be combined with components and features illustrated in one or more other drawings or embodiments. In the drawings, similar symbols indicate corresponding members in some drawings and may indicate corresponding members used in one or more types of embodiment.

The included drawings are provided to further understand examples of the present invention and form part of the specification. The included drawings illustrate embodiments of the present invention and, along with textual descriptions, explain the principles of the present application. Obviously, the following drawings are merely some examples of the present application, and other drawings may be obtained on the basis of these drawings, assuming no inventive effort is required for those skilled in the art. Each drawing is as follows.

[Fig. 1] Fig. 1 is a schematic diagram of a control method for a collection device according to Example 1 of the present application.

[Fig. 2] Fig. 2 is a schematic diagram illustrating calculation of environmental data inside an unreachable region on the basis of environmental data of a surrounding region.

[Fig. 3] Fig. 3 is a schematic diagram illustrating detection of environmental data inside the unreachable region using a sub-collection device.

[Fig. 4] Fig. 4 is a schematic diagram of the collection device and the sub-collection device.

[Fig. 5] Fig. 5 is a schematic diagram of a tow wire in its stowed state.

[Fig. 6] Fig. 6 is a schematic diagram of the tow wire in its deployed state.

[Fig. 7] Fig. 7 is a schematic diagram of a Z-shaped detection path.

[Fig. 8] Fig. 8 is a schematic diagram of a circular detection path.

[Fig. 9] Fig. 9 is a schematic diagram of a region-specific detection path.

[Fig. 10] Fig. 10 is a schematic diagram of a method for the collection device to adjust a detection path.

[Fig. 11] Fig. 11 is a schematic diagram of another method for the collection device to adjust a detection path.

[Fig. 12] Fig. 12 is a schematic diagram of yet another method for the collection device to adjust a detection path.

[Fig. 13] Fig. 13 is a schematic diagram of a collection device control system.

[Fig. 14] Fig. 14 is a schematic diagram of a spatial system.

[Fig. 15] Fig. 15 is a schematic diagram of a method for a spatial system 1302 to calculate the coordinates of a wireless signal reception means.

[Fig. 16] Fig. 16 is a schematic diagram of the distances between multiple wireless transmission-reception devices.

[Fig. 17] Fig. 17 includes schematic diagrams of coordinate systems.

[Fig. 18A] Fig. 18A is a schematic diagram of a collection device according to Example 2 of the present application.

[Fig. 18B] Fig. 18B is a schematic diagram of a collection device according to Example 2 of the present application.

[Fig. 18C] Fig. 18C is a schematic diagram of a collection device according to Example 2 of the present application.

[Fig. 19] Fig. 19 is a schematic diagram of a dust removal system.

[Fig. 20] Fig. 20 is a schematic diagram of a cleaning channel 2.

[Fig. 21] Fig. 21 is a schematic diagram of an electrostatic application channel 3.

[Fig. 22] Fig. 22 is a schematic diagram of a method for a control device 40 to control a collection device 1.

[Fig. 23] Fig. 23 is a schematic diagram of another method for the control device 40 to control the collection device 1.

[Fig. 24] Fig. 24 is a schematic diagram of a method for a control device to control a collection device to move along a set movement path.

[Fig. 25] Fig. 25 is a schematic diagram of an operation 2401.

Description of Embodiments

With reference to the drawings, the above-described and other features of the present application will become apparent based on the following description of the specification. In the specification and drawings, specifically identified embodiments of the present application are disclosed, and some embodiments in which the principles of the present application can be employed are illustrated. It is to be understood that the present application is not limited to the embodiments described herein and the present application includes all corrections, modifications, and equivalents that fall within the scope of the claims as stated. Various embodiments of the present application will be described below in combination with the drawings. These embodiments are merely illustrative and are not intended to limit the present application.

In the examples of the present application, terms such as "first", "second", and the like are used to distinguish different components in terms of names, but do not indicate the spatial arrangement or temporal order of these components, for example, and these components are not to be limited by these terms. The term "and/or" includes any one and all combinations of one or more of the terms listed in connection therewith. The terms "include", "including", "have", and the like refer to the presence of the described features, components, elements, or parts, but do not exclude the presence/addition of one or more other features, components, elements, or parts.

In the examples of the present application, unless otherwise specified in the context, the singular forms "one" and "the", for example, include plural forms and are not limited to the meaning of "one" but are to be understood broadly as "one kind" or "one type". Furthermore, the term "the" is to be understood to include both singular and plural forms. Moreover, unless otherwise specified in the context, the term "according to" is to be understood as "at least in part according to..." and the terms "based on" and "on the basis of" are to be understood as "based at least in part on..." and "on the basis of at least in part on...".

<Example 1>

Example 1 of the present application provides a collection device, a control method for the collection device, and a spatial system.

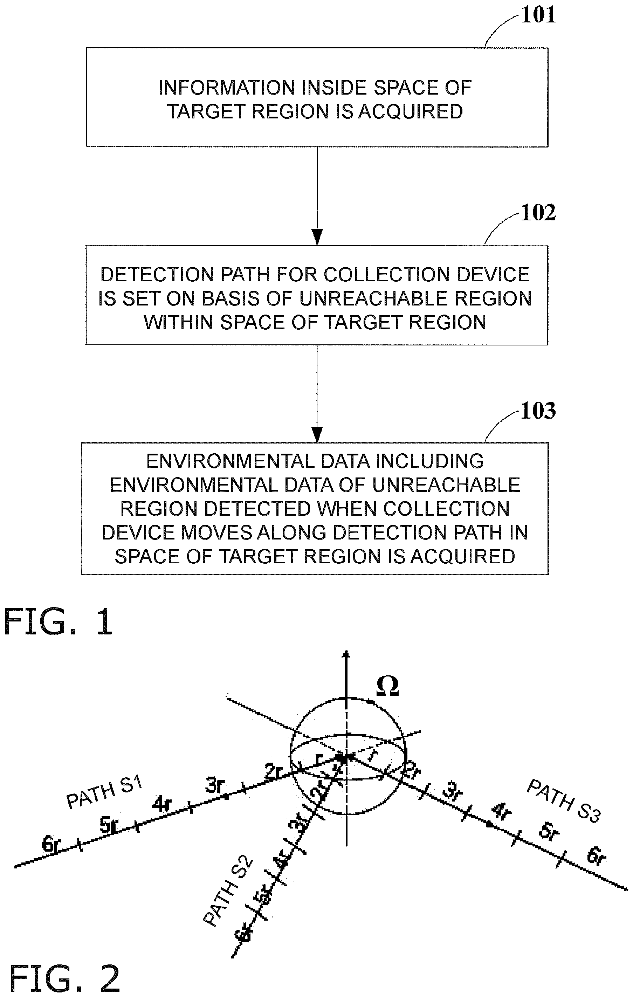

Fig. 1 is a schematic diagram of a collection device control method according to an example of the present application.
As illustrated in Fig. 1, the control method for a collection device includes

> an operation 101 for acquiring information inside the space of a target region,
> an operation 102 for setting a detection path for a collection device on the basis of an unreachable region within the space of the target region, and
> an operation 103 for acquiring environmental data including environmental data of the unreachable region detected when the collection device moves along the detection path in the space of the target region.

According to an example of the present application, a detection path for a collection device is set on the basis of an unreachable region, and environmental data of the unreachable region is calculated. This enables the environmental data of the region where the collection device cannot reach to be detected.
In the present example, the collection device can move horizontally. For example, the collection device moves on the ground or on the surface of objects such as furniture and/or wall surfaces. The collection device can also move vertically, and for example, the collection device can have a propeller or a floating unit (for example, a floating balloon) so as to control the vertical movement of the collection device.
In the present example, the collection device is turned on in response to a control command (for example, a command generated based on user voice or gesture) and can move along the detection path set in the operation 102. In a case where the collection device moves to one or more locations on the detection path, the collection device can pause for a while (for example, one minute or a few minutes) at a location, detect environmental data at the location, and then continue moving to the next location. This makes it possible to detect environmental data after air conditions around the collection device have stabilized, so that the detection accuracy is high. The detection accuracy is higher when environmental data is collected after air conditions have stabilized. Alternatively, the collection device can collect environmental data while moving. For example, in a case where the collection device detects environmental data along the detection path, the collection device can detect environmental data at a predetermined location, at regular intervals, or at a predetermined distance (for example, a location that is away from a target object or a target region by a predetermined distance). Alternatively, for example, the collection device can immediately move to a predetermined location to detect environmental data or can move to a predetermined location at a predetermined time to detect environmental data.
The environmental data detected by the collection device may be, for example, air quality (for example, concentration of particulate matter in the air), air temperature, air humidity, carbon dioxide ($CO_2$) concentration, volatile organic compounds VOC concentration, and formaldehyde concentration.
In the operation 101, the collection device can recognize or scan the layout within the space of the target region using a camera. As a result, the collection device can acquire information inside the space of the target region. Alternatively, the collection device can acquire information inside the space of the target region from Building Information Modeling (BIM). In this case, the space of the target region may be, for example, at least part of the region of a room.
In the operation 101, the unreachable region can be identified in the target space by acquiring information inside the space of the target region. The unreachable region may be a region whose size is smaller than that of the collection device, and thus the collection device cannot reach the region. For example, the unreachable region may be some corner in the room or a region or the like between an actual obstacle, such as furniture or appliance in the room, and a wall, roof, or ground. Moreover, information regarding the actual obstacle can be stored.
In the operation 101, information regarding environmental devices in the space of the target region, such as type information, location information, and size information, can be further acquired. Each environmental device is, for example, at least one type among a purifier, an air conditioner, a fresh air system, or a humidifier.
In the operation 102, one or more detection paths can be set for each unreachable region, and each detection path may be parallel to the horizontal direction, parallel to the vertical direction, or at a fixed angle with respect to the horizontal direction. The detection path may be straight or curved. In a case where the collection device moves along a certain detection path, the collection device can gradually approach the unreachable region. In addition to this, when the collection device reaches a certain location with respect to the unreachable region, the detection path is switched such that the collection device moves away from the unreachable region. As a result, it becomes possible to prevent the movement of the collection device from being impeded. In a case where the detection path is switched, the collection device can immediately move to a predetermined location to perform its detection or can move to a predetermined location at a predetermined time to perform its detection.

In the operation 103, the collection device can calculate environmental data inside the unreachable region on the basis of environmental data of a region in the surrounding area of the unreachable region. In one embodiment, the environmental data inside the unreachable region can be calculated on the basis of pieces of environmental data of regions in the surrounding area of the unreachable region detected along different detection paths. Specifically, for each detection path, the relationship between the location in the surrounding area of the unreachable region and the piece of environmental data can be identified (for example, a relational expression between the two can be established, which may be linear or nonlinear), and the environmental data inside the unreachable region is calculated on the basis of the identified relationship between the locations and the pieces of environmental data.

Fig. 2 is a schematic diagram illustrating the calculation of the environmental data inside the unreachable region on the basis of the environmental data of a surrounding region. As illustrated in Fig. 2, the unreachable region is denoted by Q, r denotes the radius of the region Q, and detection paths set for the region Q are a path S1, a path S2, and a path S3. In this case, the path S1, the path S2, the path S3 are, for example, straight lines.

In a case where the distances from the center of the region Q are nr, ..., 6r, 5r, 4r, 3r, 2r, and r, the pieces of detected environmental data (for example, air quality) are trn, ..., tr6, tr5, tr4, tr3, tr2, and tr1, respectively.

For each detection path, the equation y = f(x) is established, where y is environmental data and x is the distance from the center of the region Q. On the basis of this equation, the environmental data inside the region S2 can be calculated.

In a case where there are multiple detection paths, the environmental data inside the region Ω can be calculated for each detection path. For example, three pieces of environmental data pr1, pr2, and pr3 are obtained by calculating the environmental data inside the region Ω for the path S1, the path S2, and the path S3 in Fig. 2, respectively. The average value of the multiple (for example, three) pieces of environmental data or the average value of the pair of pieces of environmental data with the lowest mean squared error (MSE) in the multiple pieces of environmental data can be used as the environmental data of the unreachable region Ω.

For example, in a case where the mean squared errors between every pair of the three pieces of environmental data pr1, pr2, and pr3 are lower than a threshold value, the average value of pr1, pr2, and pr3 is treated as the environmental data of the unreachable region Ω. Otherwise, the average value of the pair of pieces of environmental data out of pr1, pr2, and pr3 with the lowest mean squared error is treated as the environmental data of the unreachable region Ω.

In this case, the mean squared error can be calculated by Equation 1 below.

$$ MSE = \frac{1}{m} \sum_{i=1, j=1}^{m,m} (y_i - y_j)^2 $$

where $y_i$ and $y_j$ represent the pair out of the pieces of environmental data pr1, pr2, and pr3.

In at least one example, when calculating the environmental data inside the region Q on the basis of the equation, the time difference between different location points can be treated as a factor that affects the environmental data. Specifically, the pieces of environmental data at different times at different location points can be input into a time-memory network model to output time-featured environmental data.

For example, there is a time difference to fly from point 1 to point 2, and pieces of environmental data detected at different times at different location points are input into the model and trained to acquire a long- and short-term memory network model (artificial intelligence (AI)), which is then stored. On the basis of the equation y = f(x) corresponding to each of the detection paths described above, the environmental data of the space Q is calculated, and multiple pieces of environmental data (for example, the three pieces of environmental data pr1, pr2, pr3) are acquired. In a case where the same collection device moves along different detection paths at different times, the multiple pieces of environmental data can embody information associated with the time variation of the environmental data. Thus, the multiple pieces of environmental data can be input into the long- and short-term memory network model to acquire environmental data of the region Q at a future time (for example, a specific time in the future).

By introducing temporal features, the environmental data inside the region Q at a specific time can be calculated, and furthermore, pieces of environmental data at the same time or during the same time period within the space of the target region can be integrated, and thus errors due to time factors can be avoided. As a result, even in a case where fitting of the distribution of environmental data inside the space of the entire target region is performed, the accuracy of fitting can be ensured.

In addition to the above-described method for calculating environmental data inside an unreachable region on the basis of detection results from multiple detection paths, environmental data inside an unreachable region can also be detected using a sub-collection device.

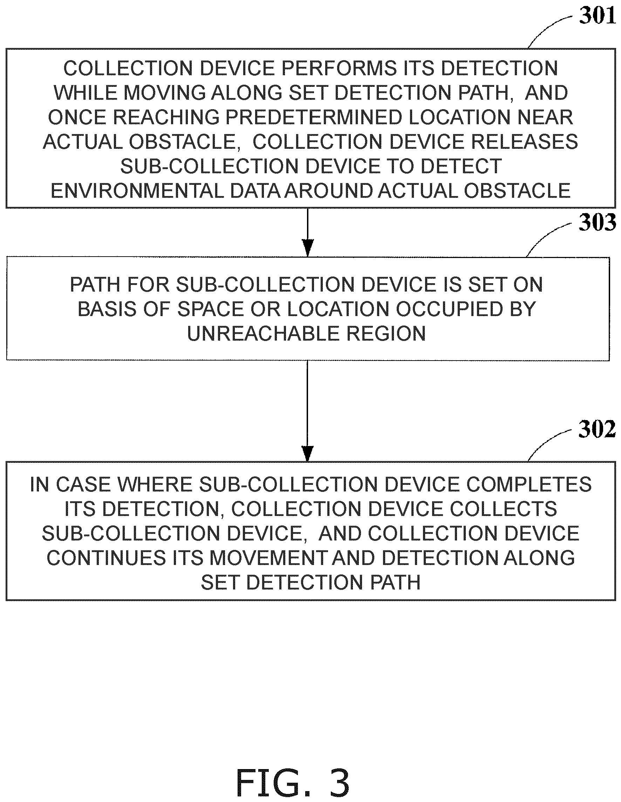

Fig. 3 is a schematic diagram illustrating a method for detecting environmental data inside an unreachable region using a sub-collection device. As illustrated in Fig. 3, a method for detecting environmental data inside an unreachable region using a sub-collection device includes

an operation 301 in which a collection device performs its detection while moving along a set detection path, and when reaching a predetermined location near the actual obstacle, the collection device releases the sub-collection device so as to detect environmental data around the actual obstacle, and

an operation 302 in which in a case where the sub-collection device completes its detection, the collection device collects the sub-collection device, and the collection device continues its movement and detection along the set detection path.

As illustrated in Fig. 3, the method for detecting environmental data inside an unreachable region using a sub-collection device further includes an operation 303 for setting a path for the sub-collection device on the basis of the space or location occupied by the unreachable region.

For example, when the collection device approaches an obstacle, the location of the collection device can be determined, and a sub-detection path for the sub-collection device can be set on the basis of the location of the collection device and the space or location occupied by the unreachable region.

The sub-collection device detects environmental data while moving along the sub-detection path set for the sub-collection device and uploads the obtained environmental data to a database.

In one example, the sub-collection device may be a probe extending out from the collection device or another movable object detachable from the collection device. The sub-collection device can be connected to the collection device by a tow wire, which ensures a strong connection between the sub-collection device and the collection device. There may be no tow wire between the sub-collection device and the collection device.

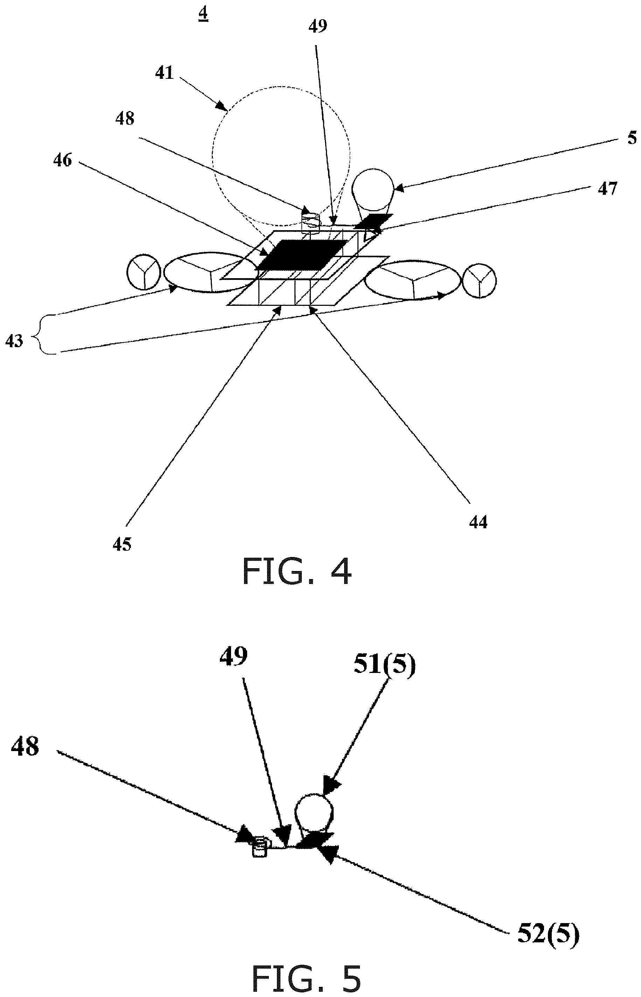

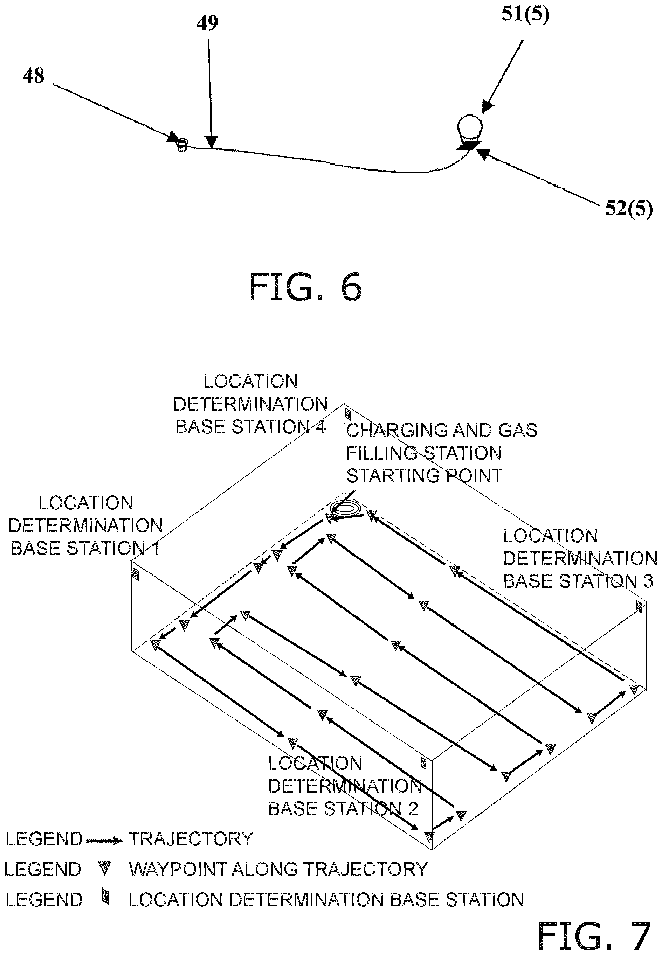

Fig. 4 is a schematic diagram of the collection device and the sub-collection device. Fig. 5 is a schematic diagram of a tow wire in its stowed state. Fig. 6 is a schematic diagram of the tow wire in its deployed state.

As illustrated in Fig. 4, a collection device 4 may include

a floating unit 41 that provides the power to raise the collection device 4, which may be, for example, a balloon having an ellipsoid or spherical shape that stabilizes flying or an amusing shape, such as a cloud shape that can achieve a calming effect or an animal shape that can enhance fun,

an acquisition device (not illustrated in Fig. 4) that acquires information inside the space of a target region,

a drive device 43 that may be, for example, a propeller that drives the collection device to move,

a transmission device (not illustrated in Fig. 4) that transmits a data signal to a database,

a detection device 44 that detects environmental data and transmits the environmental data to the transmission device, and

a control device 45 that controls the drive device 43 so that the collection device 4 flies along a preset or updated detection path that includes a detection path set on the basis of an unreachable region within the space of the target region.

The collection device 4 further includes a battery 46 that provides electrical energy to the collection device 4.

The collection device 4 may be provided with a sub-detection device 5 that is detachable from the collection device 4 and collectible by the collection device 4.

For example, in a case where the collection device 4 is at a location near the unreachable region, the surface with the sub-detection device 5 is directed toward the unreachable region, the sub-detection device 5 is launched into the unreachable region from a launch plate 47 on the collection device 4. A one-way rotary damper 48 installed on the collection device 4 does not have resistance, because of its rotation, to a tow wire 49 being ejected. The sub-detection device 5 has only a floating function, and the farthest distance for the sub-detection device 5 is limited to the maximum length of the tow wire 49. At the farthest distance, the sub-detection device 5 is suspended in the air (illustrated in Figs. 5, 6) by a balloon 51, a detection module 52 (illustrated in Figs. 5, 6) of the sub-detection device 5 detects environmental data. After the sub-detection device 5 has completed its detection, the motor is driven to rotate the one-way rotary damper 48, so that the tow wire 49 pulls back the sub-detection device 5, and the sub-detection device 5 is collected by the collection device 4.

In the present example, both pieces of environmental data detected by the collection device 4 and the sub-detection device 5 can be uploaded to the database, and the database fits a distribution map of environmental data inside the space of the target region on the basis of pieces of environmental data at different times at different locations.

In the operation 102 of the present example, the detection path set for the collection device includes a Z-shaped detection path, a character-shaped detection path, a circular detection path, or a region-specific detection path.

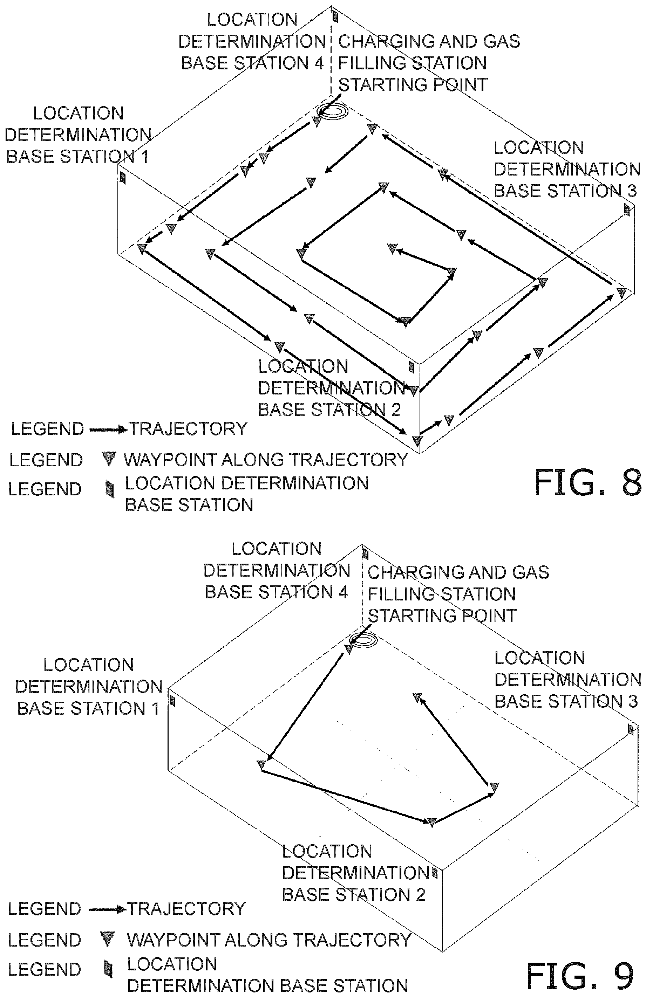

Fig. 7 is a schematic diagram of a Z-shaped detection path. Fig. 8 is a schematic diagram of a circular detection path. Fig. 9 is a schematic diagram of a region-specific detection path. In this case, in Fig. 9, the space of the target region is divided into multiple regions, and the collection device can thus move into each region. In each region, the collection device can move along a random detection path.

Detection paths can be set on the basis of information regarding the target region. For example, in a case where there is no tall obstacle in the target region, a circular detection path can be set in a prioritized manner. In a case where there is an obstacle such as a pillar in the target region, a Z-shaped preset path can be set. In a case where the layout of items arranged in the target region is concentrated, a region-specific detection path can be set in a prioritized manner. In a case where the area of the target region is large, a circular or Z-shaped detection path can be set in a prioritized manner.

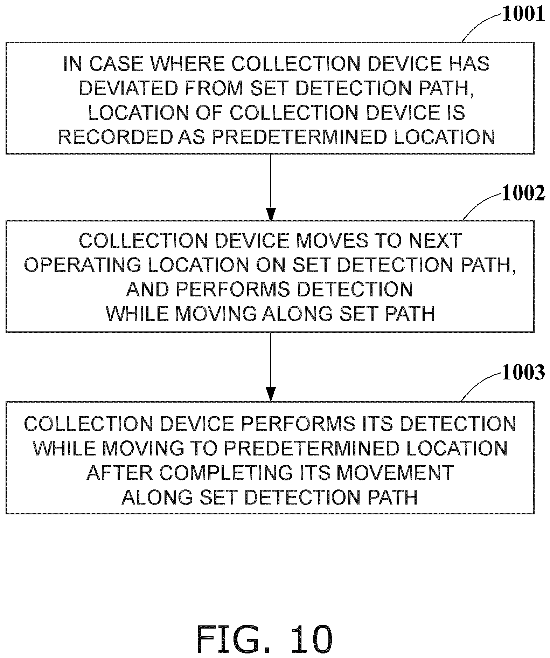

In the operation 103 of the present example, in a case where the collection device moves along the detection path, the detection path can be adjusted or updated. Fig. 10 is a schematic diagram of a method for the collection device to adjust a detection path. As illustrated in Fig. 10, one method for the collection device to adjust a detection path includes

> an operation 1001 for recording the location of the collection device as a predetermined location in a case where the collection device deviates from the set detection path,
> an operation 1002 for the collection device to move to the next operating location on the set detection path and perform its detection while moving along the set path, and
> an operation 1003 for the collection device to perform its detection while moving to the predetermined location after completing its movement along the set detection path.

In the operation 1001, when the collection device moves along the set detection path, it is determined whether or not the collection device has deviated from the set detection path, for example, whether or not the offset distance of the current location of the collection device to the detection path has exceeded a threshold value on the basis of the location information regarding the collection device. In a case where the offset distance has exceeded the threshold value, it is determined that the collection device has deviated from the set detection path. Otherwise, it is determined that the collection device has not deviated from the set detection path, and the collection device continues its movement and detection.

In the operation 1001, in a case where it is determined that the collection device has deviated from the set detection path, the current location of the collection device can be recorded as the predetermined location.

In the operation 1002, the collection device moves, and moves from the current location to the next operating location set on the detection path, and performs its detection while moving along the set path. As a result, the collection device can be returned to the set detection path in a timely manner. In this case, the operating location refers to multiple locations preset on the detection path.

In the operation 1003, after completing its movement along the set detection path, the collection device returns to the predetermined location marked in the operation 1001 and can perform its detection again.

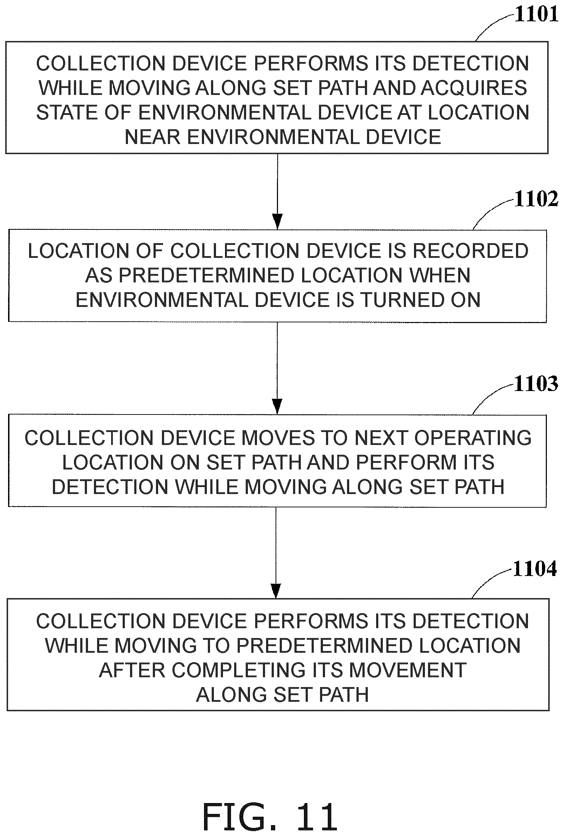

Fig. 11 is a schematic diagram of another method for the collection device to adjust a detection path. As illustrated in Fig. 11, another method for the collection device to adjust a detection path includes

> an operation 1101 for the collection device to perform its detection while moving along a set path and acquire the state of an environmental device at a location near the environmental device,
> an operation 1102 for recording the location of the collection device as a predetermined location when the environmental device is turned on,
> an operation 1103 for the collection device to move to the next operating location on the set path and perform its detection while moving along the set path, and
> an operation 1104 for the collection device to perform its detection while moving to the predetermined location after completing its movement along the set path.

In the operation 1101, when the collection device moves along the set detection path, it is determined whether or not the collection device is approaching the environmental device on the basis of the information collected in the operation 101, and it is determined at a location near the environmental device (for example, a location that is away from the environmental device by a predetermined distance) whether or not the environmental device is turned on. Whether or not the environmental device is turned on is determined, for example, by detecting wind speed, temperature, humidity, or the like, or by receiving electromagnetic signals or the like emitted by the environmental device when the environmental device operates.

In a case where it is determined that the environmental device is not turned on, the collection device performs its detection while moving along the set detection path.

In a case where the environmental device is turned on, the current location of the collection device is recorded as the predetermined location in the operation 1002.

In the operation 1103, the collection device moves, and moves from the current location to the next operating location set on the detection path, and performs its detection while moving along the set path. As a result, the collection device can be returned to the set detection path in a timely manner. In this case, the operating location refers to multiple locations preset on the detection path.

In the operation 1104, after completing its movement along the set detection path, the collection device returns to the predetermined location marked in the operation 1102 and can perform its detection again. For example, in a case where the environmental device is turned off, the collection device returns to the predetermined location marked in the operation 1102 and performs its detection again.

Environmental devices generally affect the direction of air flow in the environment, and thus the collection device is likely to deviate from the set detection path. The method illustrated in Fig. 11 can thus cause environmental devices in the ON state to be less likely to affect the movement of the collection device.

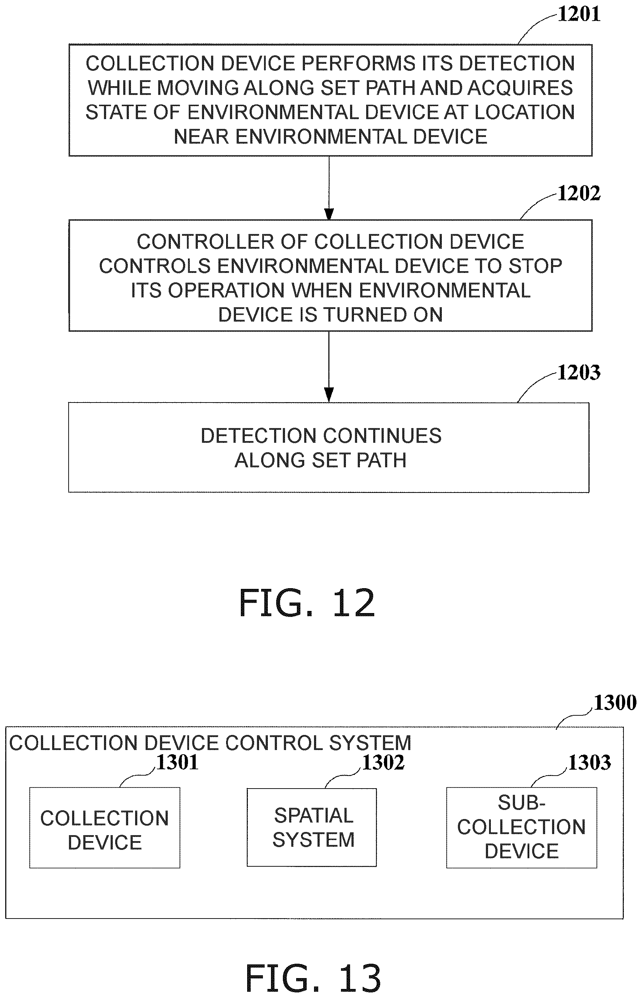

Fig. 12 is a schematic diagram of yet another method for the collection device to adjust a detection path. As illustrated in Fig. 12, yet another method for the collection device to adjust a detection path includes

an operation 1201 for the collection device to perform its detection while moving along a set path and acquire the state of an environmental device at a location near the environmental device,
an operation 1202 for a controller of the collection device to control the environmental device to stop its operation when the environmental device is turned on, and
an operation 1203 for continuing its detection along the set path.

In the operation 1201, when the collection device moves along the set detection path, it is determined whether or not the collection device is approaching the environmental device on the basis of the information collected in the operation 101, and it is determined at a location near the environmental device (for example, a location that is away from the environmental device by a predetermined distance) whether or not the environmental device is turned on. Whether or not the environmental device is turned on is determined, for example, by detecting wind speed, temperature, humidity, or the like, or by receiving electromagnetic signals or the like emitted by the environmental device when the environmental device operates.

In a case where it is determined that the environmental device is not turned on, the collection device performs its detection while moving along the set detection path.

In a case where it is determined that the environmental device is turned on, the controller of the collection device can control the environmental device to stop its operation. This can cause the air flow during operation of the environmental device to be less likely to interfere with the movement of the collection device.

In the operation 1203, the collection device can move along the set path and continue its detection.

An example of the present application further provides a collection device control system.

Fig. 13 is a schematic diagram of a collection device control system. As illustrated in Fig. 13, a collection device control system 1300 includes

a collection device 1301 that is capable of moving and detects environmental data, and
a spatial system 1302 that determines the location of the collection device.

A control device (not illustrated in Fig. 13) of the collection device 1301 controls the collection device 1301 to move along a set detection path. In addition, the control device can control a detection device of the collection device 1301 to detect environmental data.

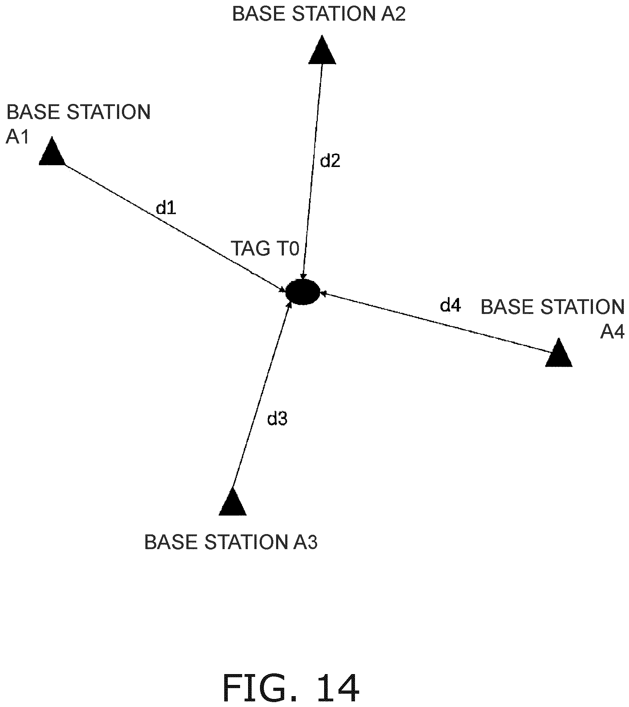

Fig. 14 is a schematic diagram of a spatial system. As illustrated in Fig. 14, the spatial system 1302 includes

a wireless signal reception means T0, such as a tag, for determining the location of the collection device in the space, the wireless signal reception means T0 being installed on the collection device,
two or more wireless transmission-reception devices, such as A1, A2, A3, and A4 in Fig. 14, that are base stations for communicating with the wireless signal reception means T0, such as base stations for transmitting and receiving wireless signals, and
a calculation module 1401 for identifying the location of the wireless signal reception means T0 on the basis of the distance between the wireless signal reception means T0 and each of the wireless transmission-reception devices (A1 to A4) and the distances between the two or more wireless transmission-reception devices.

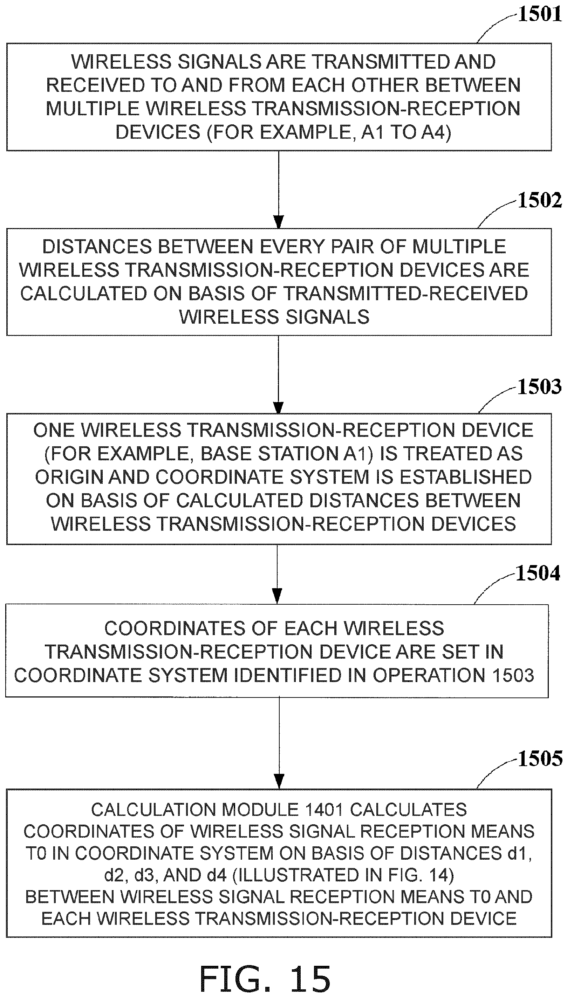

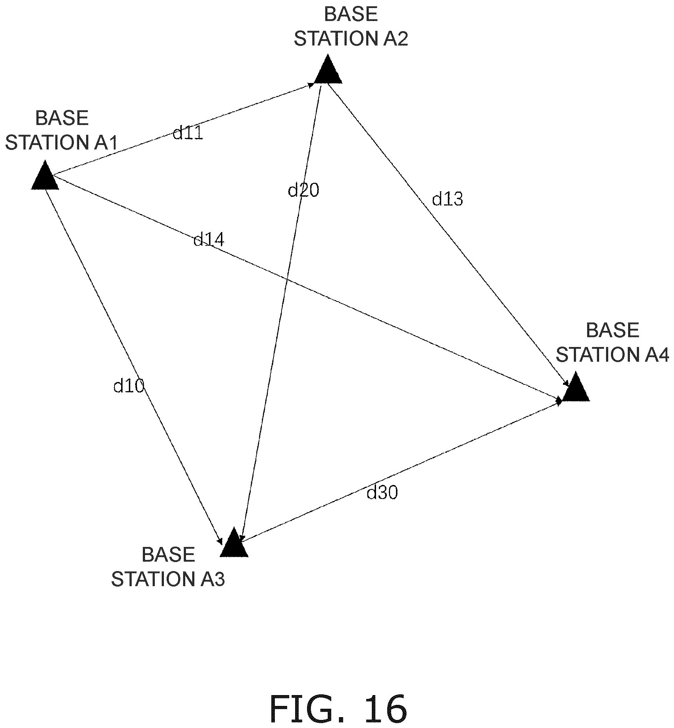

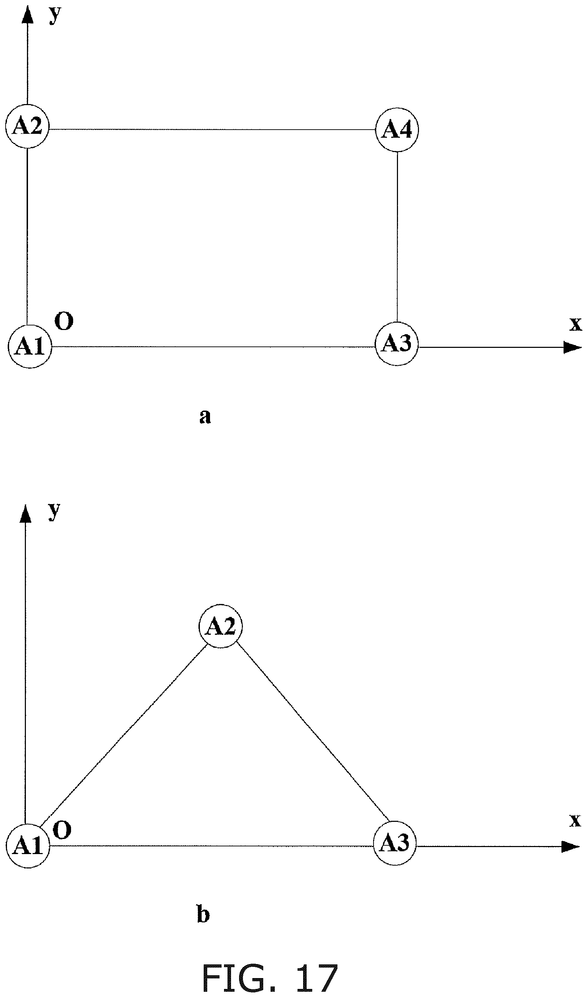

Fig. 15 is a schematic diagram of a method for the spatial system 1302 to calculate the coordinates of the wireless signal reception means. Fig. 16 is a schematic diagram of the distances between multiple wireless transmission-reception devices. Fig. 17 includes schematic diagrams of coordinate systems.

As illustrated in Fig. 15, a method for calculating the coordinates of the wireless signal reception means T0 includes

an operation 1501 for transmitting and receiving wireless signals to and from each other between multiple wireless transmission-reception devices (for example, A1 to A4),
an operation 1502 for calculating the distances between every pair of the multiple wireless transmission-reception devices on the basis of the transmitted-received wireless signals, the operation 1502 making it possible to calculate the distances on the basis of arrival times such that the distance between A1 and A2 is d11, the distance between A1 and A3 is d10, the distance between A1 and A4 is d14, the distance between the distance between A2 and A3 is d20, the distance between A2 and A4 is d13, and the distance between A3 and A4 is d30 in Fig. 16,

an operation 1503 for treating one wireless transmission-reception device (for example, the base station A1) as the origin and establishing the coordinate system on the basis of the calculated distances between the wireless transmission-reception devices, the operation 1503 being an operation in which in a case where there are four wireless transmission-reception devices as illustrated in a of Fig. 17, a coordinate system is established, which may be a three-dimensional coordinate system, but only the x-y plane is illustrated in the drawing, and in a case where there are three wireless transmission-reception devices, the established coordinate system may be a planar coordinate system as illustrated in b of Fig. 17, namely the plane where A1, A2, and A3 are located is the x-y plane, and it is not possible to calculate whether the wireless signal reception means T0 is located above or below the x-y plane in this case, and thus a height sensor (for example, an ultrasonic distance sensor) needs to be mounted on the collection device so as to identify the coordinates of the wireless signal reception means T0 in the Z-direction (namely the direction perpendicular to the x-y plane),

an operation 1504 for setting coordinates of each wireless transmission-reception device in the coordinate system identified in the operation 1503, and an operation 1505 for the calculation module 1401 to calculate coordinates of the wireless signal reception means T0 in the coordinate system on the basis of the distances d1, d2, d3, and d4 (illustrated in Fig. 14) between the wireless signal reception means T0 and each of the wireless transmission-reception devices, the operation 1505 making it possible to calculate the distances between the wireless signal reception means T0 and each of the wireless transmission-reception devices on the basis of the arrival times.

In the present example, the location determination method for the spatial system 1302 is not limited to that illustrated in Fig. 15. For example, the spatial system 1302 may perform location determination on the basis of ultra-wideband (Ultra Wide Band, UWB) technology or Bluetooth®. In this case, ultra-wideband technology is a wireless carrier wave communication technology that uses non-sinusoidal narrow pulses at the nanosecond level to transmit data without using sinusoidal waves, thus occupying a wide spectral range. The collection device 1301 may perform location determination using an inertial navigation device installed on the collection device 1301, instead of performing location determination on the basis of the spatial system 1302.

As illustrated in Fig. 13, the collection device control system may further include a sub-collection device 1303. The sub-collection device 1303 is provided in the collection device 1301, and can leave the collection device 1301 and return to the spatial system 1302. The collection device 1301 has the same configuration and description as the collection device 4, and the sub-collection device 1303 is the same as the sub-detection device 5. The description of the collection device 1301 and the sub-collection device 1303 can be referred to the description of the collection device 4 and the sub-detection device 5 illustrated in Figs. 4, 5, and 6.

In the following, a method for the collection device to perform its detection will be described using one actual example. The actual example includes the following operations.

S1, where the collection device leaves an automatic charging and gas filling station (namely the starting point) and starts to fly.

S2, where the collection device acquires information inside the space of the target region (for example, a floor plan or layout diagram of the space of the target region) and sets different detection paths on the basis of an unreachable region.

S3, where the collection device moves along a set detection path and reaches a detection location on the detection path (namely an operating location, an operating spot, or the like).

S4, where the collection device stays at each detection location for a preset amount of time to detect environmental data (for example, air quality).

S5, where after completing its detection, the collection device flies along the set detection path to reach the next detection location.

S6, where the collection device stays at the detection location of S5 for a preset amount of time to detect the air quality of the space.

S7, where S5 and S6 are repeated until the collection device passes through all the detection paths.

S8, where the collection device uploads the environmental data into a database, and an environmental distribution map in the space target region is generated.

S9, where the collection device returns to the automatic charging and gas filling station for charging and gas filling.

In an actual example 1, the preset stay time can be set to, for example, one minute. Without performing the operation S2, that is, without acquiring information inside the space of the target region, S2 is omitted. The collection device cruises to detect environmental data, and uploads the detected environmental data to a server. Thereafter, an accurate environmental distribution map is generated, and the collection device prepares for the next environmental cleaning or environmental purification.

In a case where the collection device encounters an environmental device that is in operation along a detection path, the collection device can control the environmental device to temporarily stop its operation by transmitting a signal to the environmental device using infrared rays or the like. Alternatively, in a case where the collection device encounters a device that is in operation along a detection path, the collection device can avoid the environmental device and further move to a detection location in the vicinity of the environmental device to perform detection after the environmental device stops its operation. In this case, the environmental device may include an air conditioner, a purifier, a humidifier, a cleaning robot, and a fresh air device.

In a case where the electric power of the collection device is lower than a predetermined value or the power consumption for propeller power is greater than a predetermined value (for example, the balloon as a floating unit is short of air) during the flight process, the collection device terminates the process of flying along the detection path to fly to the charging and gas filling station to charge or receive gas. In a case where there are multiple charging and gas filling stations, the collection device will calculate the nearest charging and gas filling station to the current location and fly to the nearest charging and gas filling station to charge or receive gas.

The flowchart for charging the collection device may include the following operations.

511, where there are electromagnets at the positive and negative terminals of the charging interface of an automatic charging and gas filling station, and the charging port of the collection device is ferrous metal.

S12, where in a case where the charging station detects that a collection device is approaching, power is fed to the electromagnets at the positive and negative terminals of the charging interface of the automatic charging and gas filling station to charge the electromagnets.

S13, where the charger of the collection device comes into contact with the charging interface of the automatic charging and gas filling station and is thereafter tightly attracted thereto and charged.

S14, where after the collection device is fully electrically charged or when the collection device receives a departure command, the power supply to the electromagnets of the charging interface is stopped, and their magnetism disappears, allowing the collection device to fly away from the automatic charging and gas filling station.

The flowchart for the collection device to receive gas may include the following operations.

S21, where the gas filling interface of the automatic charging and gas filling station has an electromagnet and is a circular port whose outermost surface is a sand polished surface. The gas filling port of the collection device is ferrous metal, and the outermost surface of the port is a sand polished surface.

S22, where in a case where the charging station detects that a collection device is approaching, power is fed to the electromagnet of the gas filling interface of the automatic charging and gas filling station to charge the electromagnet.

S23, where the charger of the collection device comes into contact with the charging interface of the automatic charging and gas filling station and is thereafter tightly attracted to the charging interface.

S24, where helium gas is output from the gas filling port of the automatic charging and gas filling station, and the gas filling port of the collection device is a check valve, which only receives gas and cannot output gas.

S25, where after the collection device is fully electrically charged or when the collection device receives a departure command, the power supply to the electromagnet of the gas filling interface is stopped, and its magnetism disappears, allowing the collection device to fly away from the automatic charging and gas filling station.

According to an example of the present application, a detection path for a collection device is set on the basis of an unreachable region, and environmental data of the unreachable region is calculated. This enables the environmental data of the region where the collection device cannot reach to be detected.

<Example 2>

Example 2 of the present application provides a collection device and a control method for the collection device. The collection device can be used for dust removal systems.

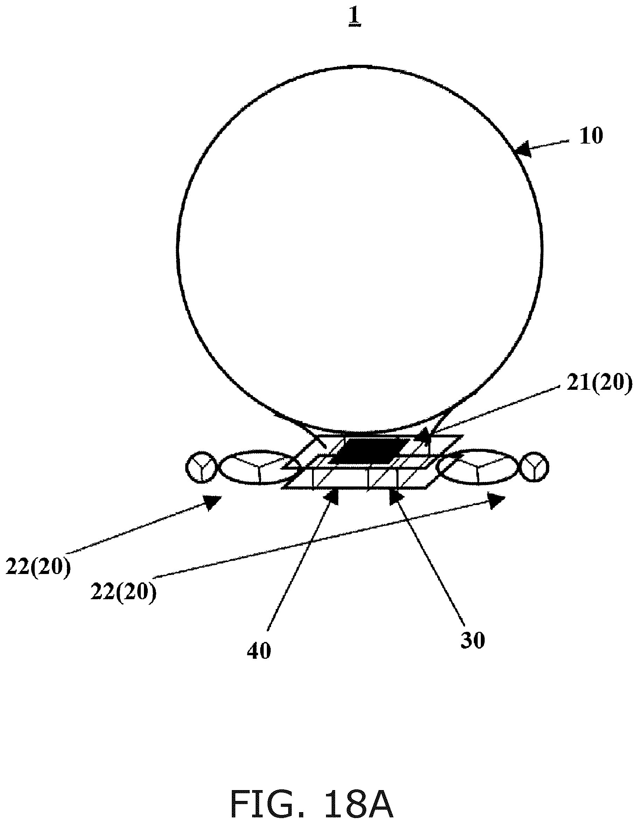

Fig. 18A is a schematic diagram of a collection device according to Example 2 of the present application. As illustrated in Fig. 18A, a collection device 1 includes a floating unit 10, a drive device 20, a detection device 30, and a control device 40.

In this case, the interior of the floating unit 10 is filled with gas to provide power to raise the collection device 1, and also static electricity can be generated on the outside surface of the floating unit 10. For example, the material of the floating unit 10 is an insulating material such as plastic or rubber. The drive device 20 drives to operate the collection device 1. The detection device 30 detects environmental data, and the environmental data may be transmitted to the control device 40 or to a communication device (not illustrated) of the collection device. The control device 40 controls the drive device 20 to drive the collection device 1 to move along the dust removal path. In this case, the floating unit 10 that accumulates static electricity adsorbs dust particles in the environment in the process of the collection device 1 moving along the dust removal path.

In accordance with Example 2 of the present application, the collection device has a floating unit whose surface accumulates static electricity and whose interior can be filled with gas, so that the floating unit itself can not only provide power for the collection device to rise but also be used to adsorb dust particles. Thus, the dust adsorption efficiency can be improved, and energy can be saved, thereby reducing costs.

In the present example, the control device 40 may further has functions that the control device 45 has in Example 1, which allows the control device 40 to perform the control method described in Example 1.

In the present example, as illustrated in Fig. 18A, the floating unit 10 has a spherical shape, but the present application is not limited to this. For example, the floating unit 10 may have an ellipsoid shape, a cloud shape, an animal shape, or the like. In this case, an ellipsoid shape can increase flight stability, cloud and animal shapes have larger surface areas, which are helpful in improving the adsorption efficiency for dust particles, and also the cute shapes can play a calming role for the user.

In the present example, as illustrated in Fig. 18A, the drive device 20 includes a battery 21 and multiple (for example, two or more) propellers 22. The multiple propellers 22 are mounted so as to uniformly surround the floating unit 10, and the multiple propellers 22 are mounted in the same plane. The battery 21 is fixed to a lower part of the floating unit 10. The propellers 22 not only stabilize the flight of the collection device 1 but also accelerate the settling of particulate substances to the ground, allowing the number of particulate substances inhaled by people to be reduced and making it possible to improve the dust removal effect.

In the present example, the detection device 30 may be mounted on the floating unit 10. For example, the detection device 30 is positioned at a lower part of the floating unit 10. The detection device 30 may include a first dust particle sensor that can detect dust particle concentration in the environment on the basis of a thermal image. Moreover, the detection device 30 can further detect at least one type among pieces of environmental data, such as air temperature, air humidity, carbon dioxide ($CO_2$) concentration, volatile organic compound (VOC) concentration, formaldehyde concentration, or carbon monoxide (CO) concentration.

The dust removal system can further include a second detection device, which may include a second dust particle sensor (not illustrated). The second dust particle sensor can be installed at a fixed location in the room. For example, a predetermined number of sensors can be distributed at the location determination base stations or other locations in the room, and the second dust particle sensor can detect dust particle concentration at the fixed location. Thus, the dust particle concentration data detected by the second dust particle sensor and the dust particle concentration data detected by the first dust particle sensor can be combined, thereby more accurately fitting the dust particle concentration distribution situation of the target region (for example, the inside of the room). The second detection device can further detect at least one type among pieces of environmental data, such as air temperature, air humidity, carbon dioxide ($CO_2$) concentration, volatile organic compound (VOC) concentration, formaldehyde concentration, or carbon monoxide (CO) concentration.

In the present example, the environmental data detected by the detection device 30 and/or the second detection device can be transmitted to a server to generate environmental data distribution information regarding the target region (for example, the inside of the room). In this case, the environmental data distribution information is, for example, an environmental data distribution map. For example, the server can receive environmental data and location data corresponding to the environmental data, update the environmental data distribution map using a machine learning model and using the received location data and environmental data, and exhibit the environmental data distribution map for the target region.

The environmental data distribution information may reflect environmental data at a certain time or during a certain time period. Alternatively, a neural network may be introduced to reflect, in the environmental data distribution information, estimated environmental data corresponding to a certain time or time period in the future.

In the present example, the control device 40 can not only control the drive device 20 to drive the collection facility 1 to move along the dust removal path but also control the drive device 20 to drive the collection facility 1 to move along a friction charging path and/or a dust particle collection path. In this case, in the dust particle collection path, dust particles adsorbed on and static electricity accumulated on the surface of the floating unit 10 are removed. In the friction charging path, static electricity is generated and accumulated on the surface of the floating unit 10. This allows the dust particle collection path, friction charging path, and dust removal path to form one complete operation path for the collection device 1 and to realize automation of the operation procedure. For example, after receiving a command, the collection device 1 moves along the dust removal path, which causes the floating unit 10 to adsorb dust particles. Next, the collection device 1 enters the dust particle collection path, the dust particles adsorbed on and static electricity accumulated on the surface of the floating unit 10 are removed, and thereafter the collection device 1 entering the friction charging path causes the surface of the floating unit 10 to accumulate static electricity again, and the collection device 1 prepares for the next dust removal.

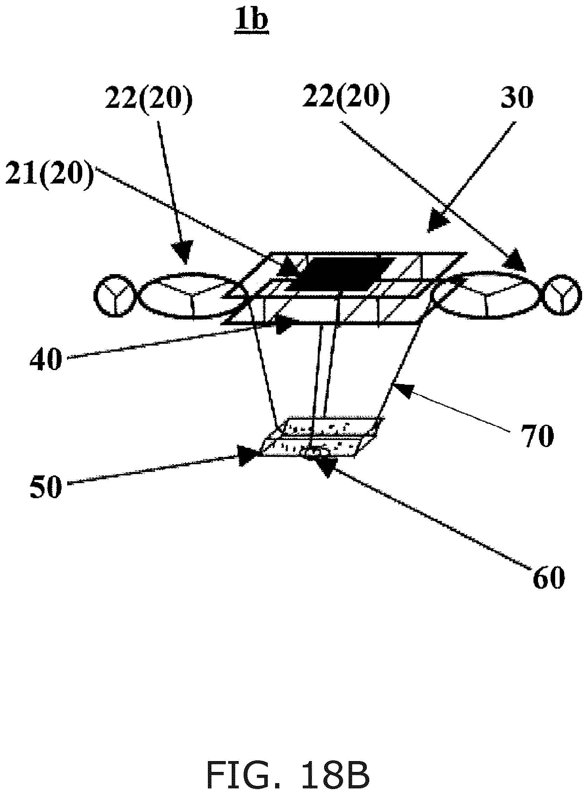

Fig. 18B is another schematic diagram of a collection device according to the example of the present application. As illustrated in Fig. 18B, a collection device 1b includes a floating unit (not illustrated), the drive device 20, the detection device 30, the control device 40, a sponge 50, an atomizing sheet 60, and traction units 70.

In this case, the description of the floating unit (not illustrated), the drive device 20, the detection device 30, and the control device 40 is the same as that for Fig. 1, and will not be repeated. The sponge 50 may be suspended below the control device 40. The atomizing sheet 60 is provided at a lower part of the sponge 50. The atomizing sheet 60 can atomize and output water contained in the sponge 50. Four traction units 70 can tow the sponge 50 and the atomizing sheet 60. This allows the collection device 1b to improve the humidity in the environment.

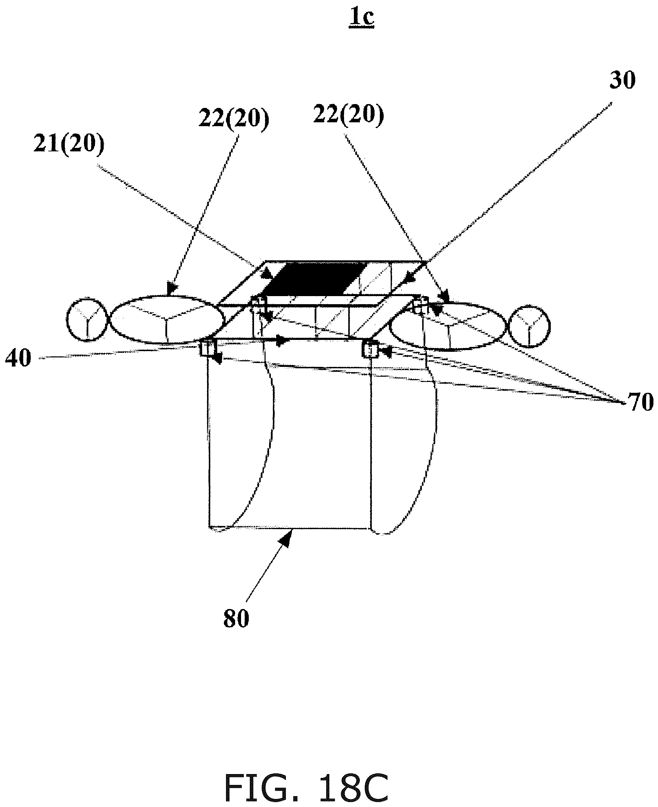

Fig. 18C is yet another schematic diagram of a collection device according to the example of the present application. As illustrated in Fig. 18C, a collection device 1c includes the floating unit (not illustrated), the drive device 20, the detection device 30, the control device 40, the traction units 70, and an air agitation net 80.

In this case, the description of the floating unit (not illustrated), the drive device 20, the detection device 30, the control device 40, and the traction units 70 is the same as that for Fig. 18A or 18B and will not be repeated. The air agitation net 80 may be a lightweight, air-impermeable net, for example, polyethylene. The air agitation net 80 is towed by the traction units 70. The air agitation net 80 can accelerate air circulation in the room by facilitating air flow.

Fig. 18C illustrates a state in which the air agitation net 80 is open. The air agitation net 80 may be stowed away in a case where the air agitation net 80 does not need to operate.

In the following description, the collection device 1 is described as an example. Similarly, substantially the same description applies to the collection device 1b and the collection device 1c.

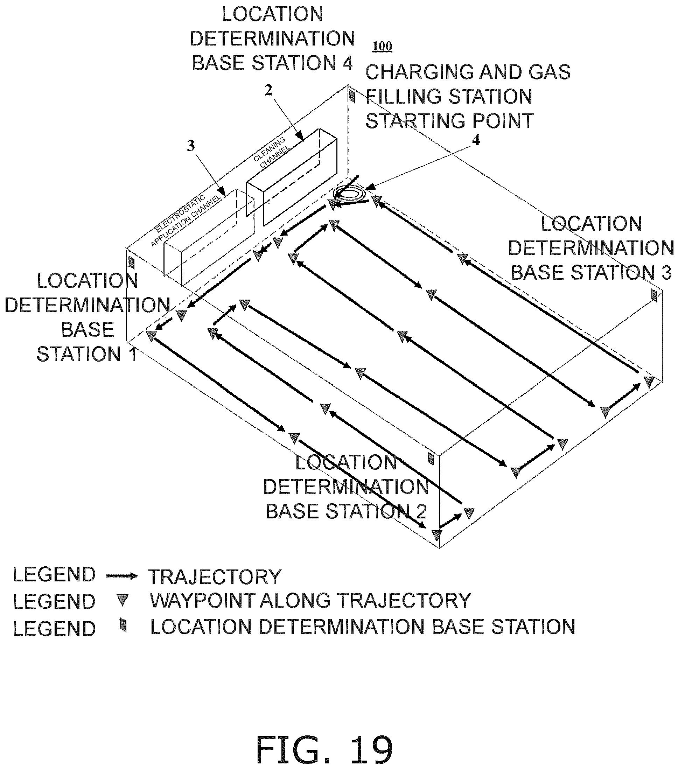

Fig. 19 is a schematic diagram of a dust removal system to which a collection device according to Example 2 is applied. The collection device 1 is not illustrated in a dust removal system 100 in Fig. 19. As illustrated in Fig. 19, the dust removal system 100 includes, in addition to the collection device 1 (not illustrated), at least one of a cleaning channel 2, an electrostatic application channel 3, or a charging stand (for example, a charging and gas filling spot) 4. In this case, the cleaning channel 2 can be located on the dust particle collection path, the electrostatic application channel 3 can be located on the friction charging path, and the charging stand 4 may be the starting point from which the collection device 1 takes off or the starting point from which the collection device 1 takes off again after charging en route.

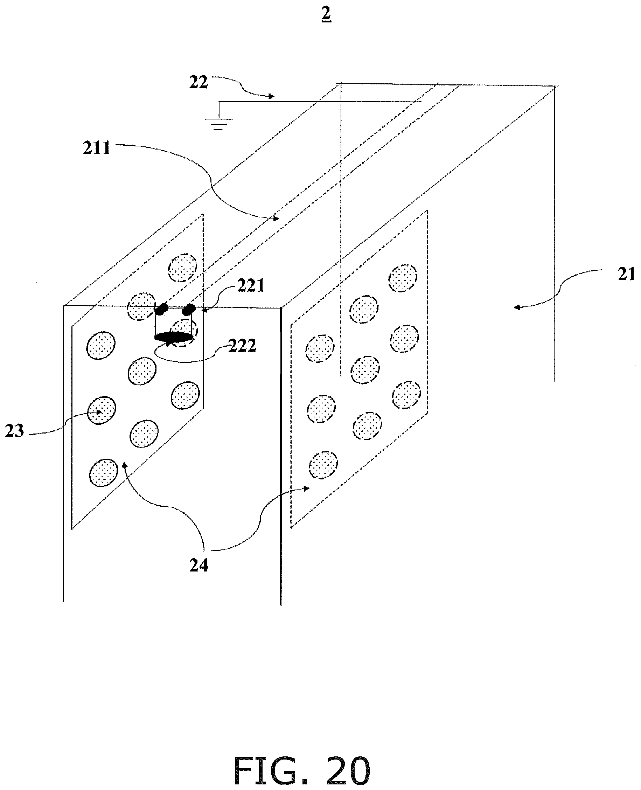

Fig. 20 is a schematic diagram of the cleaning channel 2. As illustrated in Fig. 20, the cleaning channel 2 includes a first housing 21 and a ground metal structure 22. The ground metal structure 22 is installed at the top of the first housing 21. The ground metal structure 22 includes, for example, a first base 221 and a first suction port 222, both of which are manufactured from metal material. The first suction port 222 is connected to the first housing 21 with the first base 221 interposed therebetween. The first suction port 222 is used to create suction to pull the floating unit 10 of the collection device 1 to the top of the first housing 21, and is used for the floating unit 10 to discharge static electricity through the ground metal structure 22. The first base 221 may have a pulley structure and can move along a pulley track 211 at the top of the first housing 21.

As illustrated in Fig. 20, the cleaning channel 2 further includes dust inlets 23 and a first wheel slide plate 24 installed on at least one side of the first housing 21. When the first wheel slide plate 24 moves, the first wheel slide plate 24 can move with the floating unit 10 (for example, two first wheel slide plates 24 sandwich the floating unit 10 from both sides and move with the floating unit 10). This creates a negative pressure in the dust inlets 23, so that the dust particles adsorbed on the surface of the floating unit 10 are sucked away.

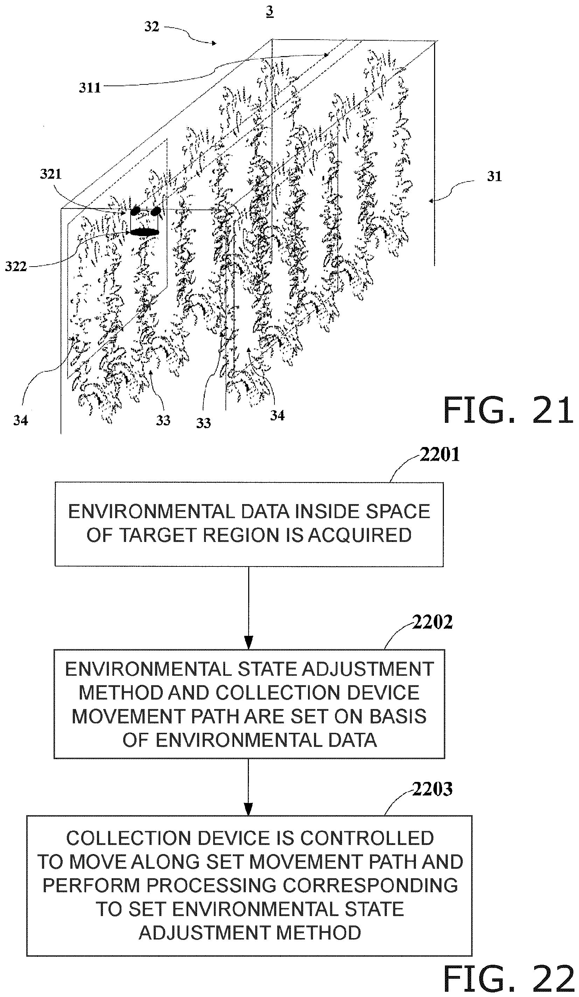

Fig. 21 is a schematic diagram of the electrostatic application channel 3. As illustrated in Fig. 21, the electrostatic application channel 3 includes a second housing 31 and an insulating structure 32. The insulating structure 32 is installed at the top of the second housing 31. The insulating structure 32 includes, for example, a second base 321 and a second suction port 322, both of which are manufactured from plastic material. The second suction port 322 is connected to the second housing 31 with the second base 321 interposed therebetween. The second suction port 322 can create suction to pull the floating unit 10 to the top of the second housing 31. The second base 321 may have a pulley structure and can move along a pulley track 311 at the top of the second housing 31.

As illustrated in Fig. 21, the electrostatic application channel 3 may further include a friction electromotive structure 33 and a second wheel slide plate 34 installed on at least one side of the second housing 31. The friction electromotive structure 33 may have, for example, a nylon bristle structure. The second wheel slide plate 34 moves with the floating unit 10 (for example, two second wheel slide plates 34 sandwich the floating unit 10 from both sides and move with the floating unit 10). The friction electromotive structure 33 is fixed on one side of the second housing 31. Thus, the friction electromotive structure 33 can generate static electricity on the surface of the floating unit 10 through friction with the floating unit 10.

As illustrated in Fig. 19, the charging stand 4 can charge the battery of the collection device 1 by means of wireless charging or magnetic attraction. The charging stand 4 may be installed at a base station (for example, a location determination base station 4 in Fig. 19). For example, the charging stand 4 may be installed at the ceiling of the room or at a lower part of the base station. The charging stand 4 may be installed at a location having a predetermined distance from the base station.

The charging stand 4 may also have the function of filling the floating unit 10 with gas, which allows both charging and gas filling functions to be integrated into the charging stand 4. For example, an electromagnet can be installed at the gas filling port of the charging stand 4, and a magnet can be installed at the gas filling port of the floating unit 10. When the floating unit 10 approaches the charging stand, the two magnets attract each other, thereby securing the floating unit 10 to the charging stand 4 and facilitating filling the floating unit 10 with gas. A check valve is installed in the gas filling port of the floating unit 10 to allow gas to enter the floating unit 10 and to prevent gas from leaking out of the floating unit 10.

By installing an independent gas filling stand, the function of filling the floating unit 10 with gas can be realized. For example, the gas filling stand may be installed near the charging stand.

In the present example, the dust removal system 100 may further include a spatial system. The spatial system can determine the location of the collection device 1.

Regarding the description of the spatial system, reference can be made to the related description for the spatial system 1302 in Example 1. For example, the content of Figs. 14, 15, 16, and 17 may be incorporated herein.

Fig. 22 is a schematic diagram of a method for the control device 40 to control the collection device 1. As illustrated in Fig. 22, the method includes

> an operation 2201 for acquiring environmental data inside the space of a target region,
> an operation 2202 for setting an environmental state adjustment method and a collection device movement path on the basis of the environmental data, and
> an operation 2203 for controlling the collection device to move along the set movement path and perform processing corresponding to the set environmental state adjustment method.

In the operation 2201, the environmental data includes at least one type among, for example, concentration of particulate matter in the air (for example, dust particle concentration and/or PM2.5 concentration, and/or PM10 concentration), air temperature, air humidity, carbon dioxide ($CO_2$) concentration, volatile organic compound (VOC) concentration, formaldehyde concentration, or carbon monoxide (CO) concentration. The environmental data may be environmental data detected by the detection device 30 and/or the second detection device described above, or may also be environmental data distribution information or the like transmitted by the server to the collection device.

In the operation 2202, the environmental state adjustment method is, for example, to remove particulate matter floating through the environment (for example, to remove dust particles), and/or to humidify, and/or to facilitate air flow.

In the operation 2202, in one embodiment, the environmental data inside the target region can be improved overall by setting a round-trip cruise path for the collection device 1 to cruise within the target region. For example, by switching the collection device 1 to auto-cruise mode, the collection device 1 can fly along the auto-cruise path and can perform the environmental state adjustment method along the auto-cruise path. In this case, in a case where the distribution of environmental data is uniform, the collection device 1 can be switched to this auto-cruise mode.

In the operation 2202, in another embodiment, a movement path can be set on the basis of the locations corresponding to pieces of environmental data that need to be improved. For example, on the basis of the acquired environmental data, several locations are enumerated where the dust particle concentrations or other environmental data are greater than a threshold value, or several top locations are enumerated where the dust particle concentrations or other environmental data are ranked from top to bottom. Starting from the starting point (for example, a charging stand), the location with the shortest distance to the starting point among the enumerated locations is calculated as a first location point on the movement path. Next, the location with the shortest distance to the first location point among the enumerated positions is calculated as a second location point. By analogy in this manner, each location point on the movement path is calculated sequentially. These location points form the location points of the movement path, and the movement path can thus be set. By switching the collection device 1 to capture mode, the movement path can be set on the basis of the locations corresponding to the pieces of environmental data that need to be improved. As a result, the collection device 1 intentionally performs environmental adjustment processing for the locations corresponding to the pieces of environmental data that need to be improved. In this case, in a case where the distribution of environmental data is non-uniform (for example, the mean squared error of the environmental data is greater than a predetermined value), the collection device 1 can be switched to this capture mode.

In a case where every piece of the environmental data is smaller than a threshold value, the control device 40 may set a default movement path that can be, for example, a serpentine path.

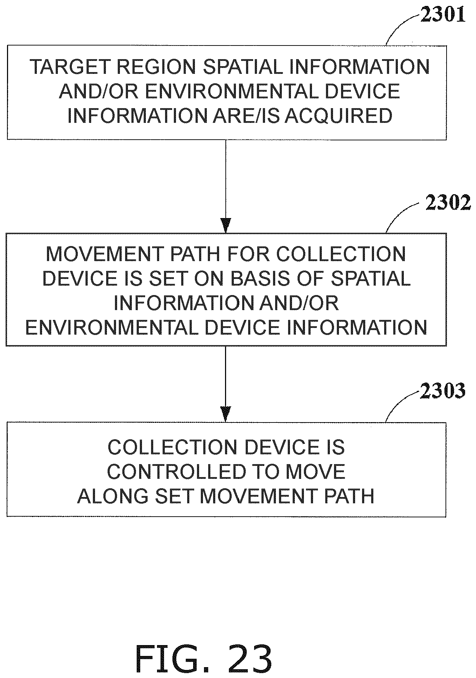

Fig. 23 is another schematic diagram of a method for the control device 40 to control the collection device 1. As illustrated in Fig. 23, the control method includes

> an operation 2301 for acquiring target region spatial information and/or environmental device information,
> an operation 2302 for setting a movement path for a collection device on the basis of the spatial information and/or environmental device information, and
> an operation 2303 for controlling the collection device to move along the set movement path.

In the operation 2301, the target region spatial information, such as a floor plan or layout diagram of the target region, is obtained by scanning the target region or from Building Information Modeling (BIM). In the operation 2301, information regarding environmental devices in the target region, such as environmental device type information, location information, and size information, can be further acquired. Examples of the environmental devices may include air conditioners, purifiers, humidifiers, cleaning robots, and fresh air devices.

In the operation 2302, the movement path can be set on the basis of the target region spatial information. The movement path may be a Z-shaped movement path illustrated in Fig. 7, a circular movement path described in Fig. 8, or a region-specific movement path illustrated in Fig. 9. For example, in a case where there is no tall obstacle in the target region, a circular detection path can be set in a prioritized manner. In a case where there is an obstacle such as a pillar in the target region, a Z-shaped preset path can be set. In a case where the layout of items arranged in the target region is concentrated, a region-specific detection path can be set in a prioritized manner. In a case where the area of the target region is large, a circular or Z-shaped detection path can be set in a prioritized manner.

In the operation 2302, the movement path is set on the basis of the environmental devices. For example, in a case where an environmental device is present on the movement path, the movement path may be adjusted so that the collection device bypasses the environmental device. Alternatively, in a case where an environmental device is present on the movement path and where the collection device flies near the environmental device, when it is detected that the environmental device is in operation, the movement path can be adjusted so that the collection device bypasses the environmental device. Moreover, when the collection device flies along the movement path or after the collection device completes its flight, in a case where it is detected that an environmental device has already been turned on, the collection device can return to the vicinity of the environmental device. This can prevent the collection facility from deviating from the movement path due to the air flow generated while the environmental device is in operation.

In a case where the collection device 1 flies along the movement path (for example, the operation 2303 or the operation 2203), when the collection device 1 flies near an environmental device, if the environmental device is detected to be in operation, the collection device 1 can transmit an infrared signal or the like so as to stop the operation of the environmental device. This can also prevent the collection facility from deviating from the movement path due to the air flow generated while the environmental device is in operation.

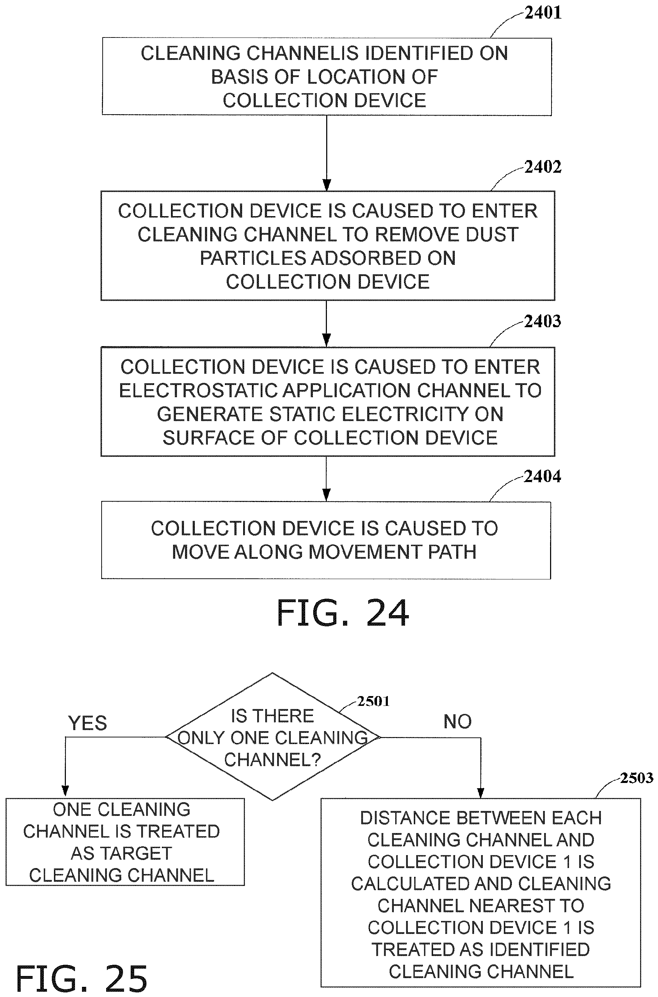

Fig. 24 is a schematic diagram of a method for the control device to control the collection device to move along the set movement path, and is used to perform the operation 2303 or operation 2203 described above. As illustrated in Fig. 24, control of the collection device 1 by the control device 40 to move along the set movement path includes

an operation 2401 for identifying a cleaning channel on the basis of the location of the collection device, an operation 2402 for causing the collection device to enter the cleaning channel to remove dust particles adsorbed on the collection device, an operation 2403 for causing the collection device to enter an electrostatic application channel to generate static electricity on the surface of the collection device, and an operation 2404 for causing the collection device to move along the set movement path.

In the present example, by performing the operation 2401, the operation 2402, and the operation 2403, the dust particles on the surface of the floating unit 10 of the collection device 1 can be removed and static electricity can be accumulated on the surface of the floating unit 10. Thus, dust removal processing can be performed.

In some embodiments, the operations 2401, 2402, and 2403 may be performed before the collection device 1 starts to move along the set movement path, or the operations 2401, 2402, and 2403 may be performed in the process of the collection device 1 moving along the set movement path. For example, in a case where it is determined in the process of the collection device 1 moving along the set movement path that the amount of dust particles adsorbed on the surface of the floating unit 10 has already reached a threshold value, the movement of the collection device 1 along the original movement path is suspended and the operations 2401, 2402, and 2403 are performed to remove the dust particles adsorbed on the surface of the floating unit 10 and cause the surface of the floating unit 10 to accumulate static electricity again. Next, in the operation 2404, the movement of the collection device 1 along the original movement path can be continued.

In the operation 2401, the location of the collection device 1 can be identified on the basis of the spatial system or an inertial navigation device in the collection device 1.

In the operation 2401, if only one cleaning channel 2 is present within the target region where the collection device 1 is located, then that cleaning channel 2 is identified as a target cleaning channel.

In the operation 2401, if there are two or more cleaning channels 2 in the target region where the collection device 1 is located, the control device 40 calculates the distance between each cleaning channel 2 and the collection device 1, and the cleaning channel 2 nearest to the collection device 1 is treated as the identified cleaning channel.

Fig. 25 is a schematic diagram of the operation 2401. As illustrated in Fig. 25, the operation 2401 is, for example, an operation as in the following, the operation including

an operation 2501 for determining whether or not there is only one cleaning channel within the target region where the collection device 1 is located, and proceeding to an operation 2502 in a case where there is only one cleaning channel and, otherwise, to an operation 2503,
the operation 2502 for treating the one cleaning channel as a target cleaning channel, and
the operation 2503 for calculating the distance between each cleaning channel and the collection device 1 and treating the cleaning channel nearest to the collection device 1 as the identified cleaning channel. For example, the distance from a cleaning channel #1 to the collection device 1 is d1, and the distance from a cleaning channel #2 to the collection device 1 is d2, where d1 < d2, and thus the cleaning channel #1 is identified as the target cleaning channel.

In the operation 2402, the control device 40 can control the collection device 1 to enter the target cleaning channel 2.

In the operation 2402, the control device 40 can transmit a control signal to cause the cleaning channel 2 to start cleaning processing. Alternatively, when the collection device enters the cleaning channel 2, the cleaning channel 2 is triggered to start the cleaning processing.

In the cleaning channel 2, the cleaning processing may include: abutting both sides of the collection device 1 against the first wheel slide plates 24 by pulling, using wind power, the collection device 1 to the top of the cleaning channel 2 and also releasing static electricity accumulated on the floating unit 10 of the collection device 1 through the first suction port 222 at the top of the cleaning channel 2; sucking away the dust particles on the surface of the floating unit 10 by turning on the dust inlets 23 on both sides of the cleaning channel 2; and when the first suction port 222 at the top attracts the collection device 1, moving the collection device 1 and the first wheel slide plate 24 forward together as the collection device 1 moves forward along the cleaning channel 2.

In a case where the release of static electricity on the collection device 1 is complete and also the cleaning of the adsorbed dust particles is complete, the control device 40 controls the collection device 1 to exit the cleaning channel 2.

In the operation 2403, the control device 40 can control the collection device 1 to enter the electrostatic application channel 3.

In the operation 2403, the control device 40 can transmit a control signal to cause the electrostatic application channel 3 to start cleaning processing. Alternatively, when the collection device enters the electrostatic application channel 3, the electrostatic application channel 3 is triggered to start electrostatic application processing.

In the electrostatic application channel 3, the electrostatic application processing may include: abutting both sides of the collection device 1 against the second wheel slide plates 34 by pulling, using wind power, the collection device 1 to the top of the electrostatic application channel 3 through the second suction port 322 at the top of the electrostatic application channel 3; and generating static electricity on the surface of the floating unit 10 by friction generated between the floating unit 10 and friction electromotive structures 33, which are fixed to both sides of the second housing 31, as the collection device 1 moves forward along the electrostatic application channel 3.

After completing the electrostatic application processing, the control device 40 controls the collection device 1 to exit the electrostatic application channel 3.

In the operation 2404, moving the collection device 1 along the set movement path includes moving the collection device 1 to a predetermined location on the movement path and then causing the collection device 1 to stay there for a predetermined amount of time, and/or moving the collection device 1 along the movement path during a predetermined time period, and/or moving the collection device along the movement path by a predetermined distance. In addition, the collection device 1 can start moving along the movement path immediately after receiving the control signal, start moving along the movement path at a predetermined time, or move to a predetermined location at a predetermined time. The specific shape of the movement path may be, for example, a Z-shaped path (for example, Fig. 7), a circular path (for example, Fig. 8), or a random path by region (for example, Fig. 9).

In the following, an operation procedure for the collection device 1 will be described using one example. The actual example includes the following operations:

51, where the user activates the collection device 1 by voice or gesture,
S2, where the collection device 1 leaves the charging stand and flies to detect environmental data inside the target region (for example, the inside of the room), where in the operation S2, the movement path to be flown may be a default path (for example, a cruising path) or a movement path set on the basis of the spatial information regarding the target region and/or environmental device information, and the specific setting method may refer to Fig. 23,
S3, where the control device of the collection device 1 generates a corresponding movement path on the basis of the environmental data distribution information to improve the environmental data,
S4, where the spatial system acquires the location of the collection device 1,

S5, where a search for the nearest cleaning channel 2 to the collection device 1 is performed,

S6, where the collection device 1 enters the cleaning channel 2,

S7, where the collection device 1 enters the electrostatic application channel 3,

S8, where the collection device 1 moves along the movement path set in S3 and performs processing for improving the environmental data, which is for example at least one of dust removal, humidification, or air flow enhancement,

S9, where the collection device 1 completes the processing and enters the cleaning channel 2 to clean dust particles on the surface of the floating unit 10, and

S10, where the collection device 1 enters charging mode or sleep mode.

In a case where the movement of the collection device 1 along the movement path is interrupted, the collection device 1 can return again to the operation S2, detect environmental data again, and change the movement path in real time on the basis of the new detection result.

In this actual example, when reaching a predetermined location on the movement path, the collection device 1 can stay there for a predetermined amount of time, thereby helping to perform processing, examples of which include dust removal, humidification, and air flow enhancement. The preset stay time can be set to, for example, one minute. Without performing the operation S2, that is, without acquiring information inside the space of the target region, S2 is omitted. The collection device 1 cruises to detect environmental data, and uploads the detected environmental data to a server. Thereafter, an accurate environmental distribution map is generated, and the collection device 1 prepares for the next environmental cleaning or environmental purification.

In a case where the collection device 1 encounters an environmental device that is in operation along a movement path, the collection device 1 can control the environmental device to temporarily stop its operation by transmitting a signal to the environmental device using infrared rays or the like. Alternatively, in a case where the collection device 1 encounters a device that is in operation along the movement path, the collection device 1 can avoid the environmental device and can further move to a detection location in the vicinity of the environmental device to perform its detection after the environmental device stops its operation. In this case, examples of the environmental device may include air conditioners, purifiers, humidifiers, cleaning robots, and fresh air devices.

In a case where the electric power of the collection device 1 is lower than a predetermined value or the power consumption for propeller power is greater than a predetermined value (for example, the balloon as the floating unit 10 is short of gas) during the flight process, the collection device 1 terminates the process of flying along the movement path to fly to the charging and gas filling station to charge or receive gas. In a case where there are multiple charging and gas filling stations, the collection device 1 will calculate the nearest charging and gas filling station to the current location and fly to the nearest charging and gas filling station to charge or receive gas.

The flowchart for the collection device 1 to charge may include the following operations.

511, where there are electromagnets at the positive and negative terminals of the charging interface of an automatic charging and gas filling station, and the charging port of the collection device is ferrous metal.

S12, where in a case where the charging station detects that a collection device 1 is approaching, power is fed to the electromagnets at the positive and negative terminals of the charging interface of the automatic charging and gas filling station to charge the electromagnets.

S13, where the charger of the collection device 1 comes into contact with the charging interface of the automatic charging and gas filling station and is thereafter tightly attracted thereto and charged.

S14, where after the collection device 1 is fully electrically charged or when the collection device receives a departure command, the power supply to the electromagnets of the charging interface is stopped, and their magnetism disappears, allowing the collection device 1 to fly away from the automatic charging and gas filling station.

The flowchart for the collection device to receive gas may include the following operations.

S21, where the gas filling interface of the automatic charging and gas filling station has an electromagnet and is a circular port whose outermost surface is a sand polished surface. The gas filling port of the collection device 1 is ferrous metal, and the outermost surface of the port is a sand polished surface.

S22, where in a case where the charging station detects that a collection device 1 is approaching, power is fed to the electromagnet of the gas filling interface of the automatic charging and gas filling station to charge the electromagnet.

S23, where the charger of the collection device 1 comes into contact with the charging interface of the automatic charging and gas filling station and is thereafter tightly attracted to the charging interface.

S24, where helium gas is output from the gas filling port of the automatic charging and gas filling station, and the gas filling port of the collection device 1 is a check valve, which only receives gas and cannot output gas.

S25, where after the collection device 1 is fully electrically charged or when the collection device receives a departure command, the power supply to the electromagnet of the gas filling interface is stopped, and its magnetism disappears, allowing the collection device to fly away from the automatic charging and gas filling station.

The following operation procedure may be applied to a collection device 1C having the air agitation net 80.

S31, where the collection device 1C leaves the automatic charging and gas filling station, transmits a startup operation signal to an air purifier, the air agitation net 80 of the collection device 1C opens, and the collection device 1C starts to fly.

S32, where the collection device 1C first reaches a first detection spatial point by flight along the preset movement path.

S33, where the collection device 1C detects an environmental parameter (for example, dust particle concentration) at the current spatial point, records the coordinate values of and dust particle concentration at this point, and uploads the data to the server.

S34, where the collection device 1C reaches the next detection spatial point by flight along the preset movement path.

S35, where the collection device 1C detects the dust particle concentration at the current spatial location, records the coordinate values of and dust particle concentration at this point, and uploads the data to the server.

S36, where S34 and S35 are repeated, and the collection device 1C reaches the location of the air purifier.

S37, where S34, S35, and S36 are repeated until the collection device 1C passes through all the movement paths.

S38, where the collection device 1C stows the air agitation net 80, returns to the automatic charging and gas filling station, and transmits a shutdown signal to the air purifier.

The above is an example of using the air agitation net 80 to promote air flow while performing detection. As a matter of course, detection does not have to be performed. In this case, it is sufficient that the environmental device (for example, an air purifier) be opened, the air agitation net 80 be opened, and the collection device 1C be caused to fly along the set movement path.

Moreover, in a case where the collection device 1C has the floating unit 10, the collection device 1C may be caused to perform S5, S6, and S7 described above, thereby serving to adsorb dust particles and other particles during the flight process.

The following operation procedure may be applied to a collection device 1B having the sponge 50 and the atomizing sheet 60.

S41, where the collection device 1B leaves the automatic charging and gas filling station and transmits a startup operation signal to a humidifier, the sponge 50 first absorbs a sufficient amount of water at the starting point, and the collection device 1B starts to fly.

S42, where the collection device 1B turns on the power source of the atomizing sheet 60 thereon and first reaches a first midway spatial point by flight along a preset movement path.

S43, where the collection device 1B turns off the power source of the atomizing sheet 60 thereon, and then stops for a predetermined amount of time (for example, one minute), detects the humidity at the current spatial location and records the coordinate values of and humidity value at this point, and uploads the data to a higher-level computer or a server.

S44, where the collection device 1B turns on the power source of the atomizing sheet 60 thereon, and reaches the next detection spatial point by flight along the preset movement path.

S45, where the collection device 1B turns off the power source of the atomizing sheet 60 thereon, and then stops for a predetermined amount of time (for example, one minute), detects the humidity at the current spatial location and records the coordinate values of and humidity value at this point, and uploads the data to the higher-level computer or server.

S46, where S44 and S45 are repeated, the collection device 1B reaches the location of the humidifier and turns off the power source of the atomizing sheet 60 thereon, and the sponge 50 receives mist from the humidifier.

S47, where S44, S45, and S46 are repeated until the collection device 1B passes through all the movement paths.

S48, where the collection device 1B turns off the power source of the atomizing sheet 60 thereof, returns to the automatic charging and gas filling station, and transmits a shutdown signal to the humidifier.

Specifically, the reason for causing the collection device 1B to stay in S43 and S45 is that if the air is kept still for a while to improve detection accuracy, the values detected in this way will be closer to those in the actual situation, and the state of environmental distribution is not disturbed by the movement of the collection device 1B, thereby further improving detection accuracy.

The above is the procedure for performing humidification while performing detection. As a matter of course, only humidification may be performed without performing detection. In this case, it is sufficient that humidification be performed along the corresponding path.

In a case where the collection device 1B has the floating unit 10, the collection device 1B may be caused to perform S5, S6, and S7 described above, thereby serving to adsorb dust particles and other particles during the flight process.

In accordance with the example of the present application, the collection device has a floating unit whose surface accumulates static electricity and whose interior can be filled with gas, so that the floating unit itself not only provides power for the collection device to rise but also can be used to adsorb dust particles. Thus, the dust adsorption efficiency can be improved, and energy can be saved, thereby reducing costs.

The control devices described with reference to the examples of the present invention can be directly embodied as hardware modules, software modules executed by processors, or combinations of hardware and software modules. These hardware modules can be realized, for example, by using field programmable gate arrays (FPGAs) to cure these software modules.

Software modules can be stored in random access memory (RAM), flash memory, read-only memory (ROM), erasable programmable read-only memory (EPROM), electrically erasable programmable read-only memory (EEPROM), registers, hard disks, removable disks, CD-ROMs, or any other forms of storage media known in the art. Such a storage medium can be coupled to the processor, whereby the processor can read information from the storage medium and write information into the storage medium, or the storage medium can be a constituent part of the processor. The processor and storage medium may be mounted within an application-specific integrated circuit (ASIC). The software modules may be stored in the memories of mobile terminals or on memory cards that can be inserted into the mobile terminals. For example, if an electronic device uses a large-capacity MEGA-SIM card or a large-capacity flash memory device, such a software module can be stored on the MEGA-SIM card or large-capacity flash memory device.

The control devices described in the present examples can be realized as general-purpose processors, digital signal processors (DSPs), ASICs, field programmable gate arrays (FPGA), or other programmable logic devices, discrete gates or transistor logic devices, discrete hardware components, or any suitable combinations thereof for execution of the functions described in the present application. For example, the control devices may each be realized as a combination of computational devices, such as a combination of a DSP and a microprocessor, multiple microprocessors, one or more microprocessors communicatively coupled to a DSP, or any other such configuration.

The examples of the present invention further relate to storage media, such as hard disks, magnetic disks, optical disks, DVDs, flash memory, and the like for storing the programs described above.

The limitations of each step according to the present solutions are not recognized as limitations for the sequential order of the steps as long as implementation of the specific solutions is not affected. The preceding step may be executed early or later, and furthermore, the preceding step along with other steps may be executed simultaneously. As long as the solutions are implemented, any order is considered to fall within the scope of the present application.

Although the present application has been described above in combination with specific embodiments, it is clear to those skilled in the art that the description of these embodiments are illustrative and not limitations on the claims of the present application. Those skilled in the art may perform various variations and modifications on the present application on the basis of the ideas and principles of this application, and these variations and modifications also fall within the scope of the present application.

**Claims**

1. A collection device comprising:

   an acquisition device that acquires information inside a space of a target region;
   a control device that sets a detection path for a collection device based on an unreachable region within the space of the target region; and
   a detection device that acquires environmental data including environmental data of the unreachable region detected when the collection device moves along the detection path in the space of the target region.

2. The collection device according to Claim 1, wherein

   acquiring the environmental data includes calculating environmental data inside the unreachable region based on environmental data of a region in a surrounding area of the unreachable region.

3.

   The collection device according to Claim 2, wherein
   the environmental data inside the unreachable region is calculated based on pieces of environmental data of regions in the surrounding area of the unreachable region detected along different detection paths.

4. The collection device according to Claim 3, wherein

   calculating environmental data inside the unreachable region based on the pieces of environmental data of the regions in the surrounding area of the unreachable region detected along different detection paths includes

identifying, for each of the detection paths, a relationship between a location in the surrounding area of the unreachable region and a piece of environmental data, and

calculating environmental data inside the unreachable region based on the identified relationships between the locations and the pieces of environmental data.

5. The collection device according to Claim 4, wherein

regarding the pieces of environmental data of the regions in the surrounding area of the unreachable region detected along the different detection paths,

an average value of a plurality of pieces of environmental data or an average value of a pair of pieces of environmental data out of the plurality of pieces of environmental data with a lowest mean squared error (MSE) is treated as the environmental data of the unreachable region.

6. The collection device according to Claim 1, wherein

acquiring information inside the space of the target region includes

acquiring information inside the space of the target region by recognizing or scanning a layout within the space of the target region using a camera or acquiring information inside the space of the target region from Building Information Modeling (BIM).

7. The collection device according to Claim 1, wherein

acquiring environmental data includes

the collection device performing its detection while moving along the set detection path, and when reaching a predetermined location near the unreachable region, releasing a sub-collection device so as to detect environmental data of a surrounding area of the unreachable region, and

the collection device collecting, in a case where the sub-collection device completes its detection, the sub-collection device and continues its movement and detection along the set detection path.

8. The collection device according to Claim 7, wherein

acquiring environmental data further includes setting a path for the sub-collection device based on the space or location occupied by the unreachable region, wherein

the sub-collection device detects environmental data while moving along the path set for the sub-collection device and uploads the obtained environmental data to a database.

9. The collection device according to Claim 8, wherein the sub-collection device is connected to the collection device by a tow wire.

10. The collection device according to Claim 1, wherein

the control device further controls the collection device to

record the location of the collection device as a predetermined location in a case where the collection device deviates from the set detection path,

move to a next operating location on the set detection path and perform its detection while moving along the set detection path, and

perform its detection while moving to the predetermined location after completing its movement along the set detection path.

11. The collection device according to Claim 1, wherein

detection performed by the detection device includes

performing its detection at a predetermined location, and/or

performing its detection at a predetermined time, and/or

performing its detection at a predetermined distance.

12. The collection device according to Claim 1, wherein

when switching the detection path, the collection device

immediately moves to a predetermined location and performs its detection, or

moves to the predetermined location at a predetermined time and performs its detection.

13. The collection device according to Claim 1, wherein the set detection path includes a Z-shaped detection path, a character-shaped detection path, a circular detection path, or a region-specific detection path.

14. The collection device according to Claim 1, wherein

the control device further controls the collection device to perform

an operation for performing its detection while moving along the set detection path and acquiring a state of an environmental device at a location near the environmental device,

an operation for a controller of the collection device to control the environmental device to stop its operation when the environmental device is turned on, and
an operation for causing the collection device to continue its movement and detection along the set detection path.

15. The collection device according to Claim 1, wherein

the control device further controls the collection device to perform
an operation for the collection device to perform its detection while moving along the set path and acquiring a state of an environmental device at a location near the environmental device,
an operation for recording a location of the collection device as a predetermined location when the environmental device is turned on,
an operation for the collection device to move to a next operating location on the set path and perform its detection while moving along the set path, and
an operation for the collection device to perform its detection while moving to the predetermined location after completing its movement along the set path.

16. The collection device according to Claim 14 or 15, wherein
the environmental device includes at least one type among a purifier, an air conditioner, a fresh air system, or a humidifier.

17. The collection device according to Claim 1, wherein
the acquired environmental data is used to generate an environmental data distribution state map.

18. The collection device according to Claim 1, further comprising:

a drive device that drives to operate the collection device; and
a transmission device that transmits a data signal to a database,
wherein the control device controls the drive device to move the collection device along a preset detection path or an updated detection path.

19. The collection device according to Claim 18, further comprising:

a floating unit that provides power for the collection device to rise by filling its interior with gas and is capable of generating static electricity on its outer surface, wherein
the control device further controls the drive device to drive the collection device to move along a dust removal path, and
the floating unit that accumulates static electricity adsorbs dust particles in an environment in a process of the collection device moving along the dust removal path.

20. The collection device according to Claim 19, wherein

the control device further controls
the drive device to drive the collection device to move along a friction charging path and/or a dust particle collection path.

21. The collection device according to Claim 19, wherein

a movement path for the collection device includes at least one of a cleaning channel, an electrostatic application channel, or a charging stand,
the cleaning channel includes a first housing and a ground metal structure installed at a top of the first housing, the ground metal structure includes a first base and a first suction port that is connected to the first housing with the first base interposed therebetween, that creates suction to pull the floating unit to the top of the first housing, and that is for the floating unit to discharge static electricity through the ground metal structure, a side of the first housing is provided with a dust inlet and a first wheel slide plate, and when the first wheel slide plate moves with the floating unit, a negative pressure is created in the dust inlet so as to remove the dust particles adsorbed on the surface of the floating unit,
the electrostatic application channel includes a second housing and an insulating structure installed at a top of the second housing, the insulating structure includes a second base and a second suction port that is connected to the second housing with the second base interposed therebetween and that creates suction to pull the floating unit to the top of the second housing, a side of the second housing is provided with a friction electromotive structure and a second wheel slide plate, and when the second wheel slide plate moves with the floating unit, the friction electromotive structure generates static electricity on the floating unit through friction with the floating unit, and
the charging stand charges a battery of the collection device by means of wireless charging or magnetic attraction.

22. The collection device according to Claim 19, wherein

the detection device includes
a first dust particle sensor installed on the floating unit, and/or
a second dust particle sensor installed at a fixed location in a room.

23. The collection device according to Claim 19, wherein the drive device includes a battery and a plurality of propellers, and the plurality of propellers are installed so as to uniformly surround the floating unit, and the plurality of propellers are mounted in an identical plane, and the battery is fixed to a lower part of the floating unit.

24. The collection device according to Claim 19, wherein the floating unit has a spherical shape, an ellipsoid shape, a cloud shape, or an animal shape.

25. The collection device according to Claim 19, wherein

the control device further
controls to set an environmental state adjustment method and a movement path for the collection device based on the acquired environmental data inside the space of the target region, and
controls the collection device to move along the set movement path and to perform processing corresponding to the set environmental state adjustment method.

26. The collection device according to Claim 25, wherein

controlling the collection device to move along the set movement path includes
identifying a cleaning channel based on a location of the collection device,
causing the collection device to enter the cleaning channel to remove dust particles adsorbed on the collection device,
causing the collection device to enter an electrostatic application channel to generate static electricity on a surface of the collection device, and
causing the collection device to move along the dust removal path in the set movement path.

27. The collection device according to Claim 25, wherein the environmental data includes at least one type among concentration of particulate matter in air, air temperature, air humidity, carbon dioxide ($CO_2$) concentration, volatile organic compound (VOC) concentration, formaldehyde concentration, or carbon monoxide (CO) concentration.

28. The collection device according to Claim 25, wherein

setting a movement path includes
setting a cruise path such that the collection device adsorbs dust particles in the entire space, and/or
setting a movement path based on a location corresponding to environmental data that needs to be improved.

29. The collection device according to Claim 26, wherein

identifying a cleaning channel includes
in a case where there are two or more cleaning channels, calculating a distance between each cleaning channel and the collection device, and treating a cleaning channel nearest to the collection device as the identified cleaning channel.

30. The collection device according to Claim 26, wherein

removing dust particles adsorbed on the collection device in the cleaning channel includes
causing the collection device to enter the cleaning channel,
causing the cleaning channel to perform cleaning processing, and
controlling the collection device to exit the cleaning channel.

31. The collection device according to Claim 26, wherein

generating static electricity on the surface of the collection device includes
causing the collection device to enter the electrostatic application channel,
causing the electrostatic application channel to perform electrostatic application processing, and
controlling the collection device to exit the electrostatic application channel.

32. The collection device according to Claim 25, wherein

movement of the collection device along the movement path includes
the collection device moving to a predetermined location on the movement path and staying there for a predetermined amount of time, and/or
the collection device moving along the movement path during a predetermined time period, and/or
the collection device moving along the movement path by a predetermined distance.

33. A spatial system that determines a location of the collection device according to any one of Claims 1 to 32, comprising:

a wireless signal reception means for determining a location of the collection device in a space, the wireless signal reception means being installed on the collection device;
two or more wireless transmission-reception devices that communicate with the wireless signal reception means; and
a calculation module for identifying a location of the wireless signal reception means based on a distance between the wireless signal reception means and each of the wireless transmission-reception devices and a distance between the two or more wireless transmission-reception devices.

34. The spatial system according to Claim 33, wherein

a method for the calculation module to identify the location of the wireless signal reception means includes
transmitting and receiving a wireless signal to and from each other between the two or more wireless transmission-reception devices,
calculating distances between every pair of the two or more wireless transmission-reception devices,
treating one of the wireless transmission-reception devices as an origin and establishing a coordinate system based on the calculated distances between the wireless transmission-reception devices,
setting coordinates of each wireless transmission-reception device in the coordinate system, and
the calculation module calculating coordinates of the wireless signal reception means in the coordinate system based on the distance between the wireless signal reception means and each of the wireless transmission-reception devices.

35. A collection device control method comprising:

acquiring information inside a space of a target region,
setting a detection path for a collection device based on an unreachable region within the space of the target region, and
acquiring environmental data including environmental data of the unreachable region detected when the collection device moves along the detection path in the space of the target region.

INFORMATION INSIDE SPACE OF
TARGET REGION IS ACQUIRED

101

DETECTION PATH FOR COLLECTION DEVICE
IS SET ON BASIS OF UNREACHABLE REGION
WITHIN SPACE OF TARGET REGION

102

ENVIRONMENTAL DATA INCLUDING
ENVIRONMENTAL DATA OF UNREACHABLE
REGION DETECTED WHEN COLLECTION
DEVICE MOVES ALONG DETECTION PATH IN
SPACE OF TARGET REGION IS ACQUIRED

103

# FIG. 1

# FIG. 2

301

COLLECTION DEVICE PERFORMS ITS DETECTION
WHILE MOVING ALONG SET DETECTION PATH, AND
ONCE REACHING PREDETERMINED LOCATION NEAR
ACTUAL OBSTACLE, COLLECTION DEVICE RELEASES
SUB-COLLECTION DEVICE TO DETECT
ENVIRONMENTAL DATA AROUND ACTUAL OBSTACLE

303

PATH FOR SUB-COLLECTION DEVICE IS SET ON
BASIS OF SPACE OR LOCATION OCCUPIED BY
UNREACHABLE REGION

302

IN CASE WHERE SUB-COLLECTION DEVICE COMPLETES
ITS DETECTION, COLLECTION DEVICE COLLECTS
SUB-COLLECTION DEVICE, AND COLLECTION DEVICE
CONTINUES ITS MOVEMENT AND DETECTION ALONG
SET DETECTION PATH

FIG. 3

4

49

41

48

5

46

47

43

44

45

FIG. 4

49    51(5)

48

52(5)

FIG. 5

**48**   **49**   **51(5)**

**52(5)**

# FIG. 6

LOCATION
DETERMINATION
BASE STATION 4   CHARGING AND GAS
FILLING STATION
STARTING POINT

LOCATION
DETERMINATION
BASE STATION 1

LOCATION
DETERMINATION
BASE STATION 3

LOCATION
DETERMINATION
BASE STATION 2

LEGEND ⟶ TRAJECTORY

LEGEND ▼ WAYPOINT ALONG TRAJECTORY

LEGEND ▌ LOCATION DETERMINATION BASE STATION

# FIG. 7

FIG. 8

FIG. 9

1001

IN CASE WHERE COLLECTION DEVICE HAS
DEVIATED FROM SET DETECTION PATH,
LOCATION OF COLLECTION DEVICE IS
RECORDED AS PREDETERMINED LOCATION

1002

COLLECTION DEVICE MOVES TO NEXT
OPERATING LOCATION ON SET DETECTION PATH,
AND PERFORMS DETECTION
WHILE MOVING ALONG SET PATH

1003

COLLECTION DEVICE PERFORMS ITS DETECTION
WHILE MOVING TO PREDETERMINED LOCATION
AFTER COMPLETING ITS MOVEMENT
ALONG SET DETECTION PATH

# FIG. 10

1101

COLLECTION DEVICE PERFORMS ITS DETECTION WHILE MOVING ALONG SET PATH AND ACQUIRES STATE OF ENVIRONMENTAL DEVICE AT LOCATION NEAR ENVIRONMENTAL DEVICE

1102

LOCATION OF COLLECTION DEVICE IS RECORDED AS PREDETERMINED LOCATION WHEN ENVIRONMENTAL DEVICE IS TURNED ON

1103

COLLECTION DEVICE MOVES TO NEXT OPERATING LOCATION ON SET PATH AND PERFORM ITS DETECTION WHILE MOVING ALONG SET PATH

1104

COLLECTION DEVICE PERFORMS ITS DETECTION WHILE MOVING TO PREDETERMINED LOCATION AFTER COMPLETING ITS MOVEMENT ALONG SET PATH

FIG. 11

1201

COLLECTION DEVICE PERFORMS ITS DETECTION
WHILE MOVING ALONG SET PATH AND ACQUIRES
STATE OF ENVIRONMENTAL DEVICE AT LOCATION
NEAR ENVIRONMENTAL DEVICE

1202

CONTROLLER OF COLLECTION DEVICE
CONTROLS ENVIRONMENTAL DEVICE TO STOP
ITS OPERATION WHEN ENVIRONMENTAL
DEVICE IS TURNED ON

1203

DETECTION CONTINUES
ALONG SET PATH

# FIG. 12

1300

COLLECTION DEVICE CONTROL SYSTEM

1301

COLLECTION
DEVICE

1302

SPATIAL
SYSTEM

1303

SUB-
COLLECTION
DEVICE

# FIG. 13

FIG. 14

1501

WIRELESS SIGNALS ARE TRANSMITTED AND
RECEIVED TO AND FROM EACH OTHER BETWEEN
MULTIPLE WIRELESS TRANSMISSION-RECEPTION
DEVICES (FOR EXAMPLE, A1 TO A4)

1502

DISTANCES BETWEEN EVERY PAIR OF MULTIPLE
WIRELESS TRANSMISSION-RECEPTION DEVICES ARE
CALCULATED ON BASIS OF TRANSMITTED-RECEIVED
WIRELESS SIGNALS

1503

ONE WIRELESS TRANSMISSION-RECEPTION DEVICE
(FOR EXAMPLE, BASE STATION A1) IS TREATED AS
ORIGIN AND COORDINATE SYSTEM IS ESTABLISHED
ON BASIS OF CALCULATED DISTANCES BETWEEN
WIRELESS TRANSMISSION-RECEPTION DEVICES

1504

COORDINATES OF EACH WIRELESS
TRANSMISSION-RECEPTION DEVICE ARE SET IN
COORDINATE SYSTEM IDENTIFIED IN OPERATION 1503

1505

CALCULATION MODULE 1401 CALCULATES
COORDINATES OF WIRELESS SIGNAL RECEPTION MEANS
T0 IN COORDINATE SYSTEM ON BASIS OF DISTANCES d1,
d2, d3, AND d4 (ILLUSTRATED IN FIG. 14)
BETWEEN WIRELESS SIGNAL RECEPTION MEANS T0 AND
EACH WIRELESS TRANSMISSION-RECEPTION DEVICE

# FIG. 15

BASE STATION A2

BASE STATION A1

BASE STATION A4

BASE STATION A3

d11

d20

d13

d14

d10

d30

FIG. 16

a

b

FIG. 17

FIG. 18A

## 1b

FIG. 18B

<u>1c</u>

FIG. 18C

LEGEND →  TRAJECTORY
LEGEND  ▼  WAYPOINT ALONG TRAJECTORY
LEGEND  ▮  LOCATION DETERMINATION BASE STATION

FIG. 19

FIG. 20

FIG. 21

ENVIRONMENTAL DATA INSIDE SPACE OF TARGET REGION IS ACQUIRED

ENVIRONMENTAL STATE ADJUSTMENT METHOD AND COLLECTION DEVICE MOVEMENT PATH ARE SET ON BASIS OF ENVIRONMENTAL DATA

COLLECTION DEVICE IS CONTROLLED TO MOVE ALONG SET MOVEMENT PATH AND PERFORM PROCESSING CORRESPONDING TO SET ENVIRONMENTAL STATE ADJUSTMENT METHOD

FIG. 22

2301

TARGET REGION SPATIAL INFORMATION
AND/OR ENVIRONMENTAL DEVICE
INFORMATION ARE/IS ACQUIRED

2302

MOVEMENT PATH FOR COLLECTION
DEVICE IS SET ON BASIS OF SPATIAL
INFORMATION AND/OR
ENVIRONMENTAL DEVICE INFORMATION

2303

COLLECTION DEVICE IS
CONTROLLED TO MOVE
ALONG SET MOVEMENT PATH

FIG. 23

2401

CLEANING CHANNELIS IDENTIFIED ON
BASIS OF LOCATION OF
COLLECTION DEVICE

2402

COLLECTION DEVICE IS CAUSED TO ENTER
CLEANING CHANNEL TO REMOVE DUST
PARTICLES ADSORBED ON
COLLECTION DEVICE

2403

COLLECTION DEVICE IS CAUSED TO ENTER
ELECTROSTATIC APPLICATION CHANNEL TO
GENERATE STATIC ELECTRICITY ON
SURFACE OF COLLECTION DEVICE

2404

COLLECTION DEVICE IS CAUSED TO
MOVE ALONG MOVEMENT PATH

# FIG. 24

2501

IS THERE
ONLY ONE CLEANING
CHANNEL?

YES

NO

2503

ONE CLEANING
CHANNEL IS TREATED
AS TARGET
CLEANING CHANNEL

DISTANCE BETWEEN EACH
CLEANING CHANNEL AND
COLLECTION DEVICE 1 IS
CALCULATED AND CLEANING
CHANNEL NEAREST TO
COLLECTION DEVICE 1 IS
TREATED AS IDENTIFIED
CLEANING CHANNEL

# FIG. 25

## INTERNATIONAL SEARCH REPORT

| | International application No. |
|---|---|
| | **PCT/JP2023/001701** |

**A.    CLASSIFICATION OF SUBJECT MATTER**

***G01D 21/00***(2006.01)i
  FI:    G01D21/00 K

According to International Patent Classification (IPC) or to both national classification and IPC

**B.    FIELDS SEARCHED**

Minimum documentation searched (classification system followed by classification symbols)

  G01D21/00; G08C15/00; H04Q9/00; G01W1/02; G01N33/00; G01N27/12

Documentation searched other than minimum documentation to the extent that such documents are included in the fields searched

  Published examined utility model applications of Japan 1922-1996
  Published unexamined utility model applications of Japan 1971-2023
  Registered utility model specifications of Japan 1996-2023
  Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2019-194572 A (UNIV. XIAN TECHNOLOGY) 07 November 2019 (2019-11-07) paragraphs [0022]-[0074], fig. 1-10 | 1-6, 11-13, 17-18, 33-35 |
| A | | 7-10, 14-16, 19-32 |
| Y | JP 2012-83294 A (SHIZUOKAKEN KORITSU DAIGAKU HOJIN) 26 April 2012 (2012-04-26) paragraphs [0079]-[0085], fig. 8-9 | 1-6, 11-13, 17-18, 33-35 |
| A | | 7-10, 14-16, 19-32 |
| Y | JP 2020-51898 A (KOITO ELECTRIC INDUSTRIES, LTD.) 02 April 2020 (2020-04-02) fig. 2 | 13 |
| Y | JP 2007-183032 A (TOSHIBA CORP.) 19 July 2007 (2007-07-19) paragraphs [0050]-[0051] | 17 |
| Y | JP 2018-512076 A (LOCATORX, INC.) 10 May 2018 (2018-05-10) paragraphs [0116]-[0118], fig. 3 | 33-34 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **03 March 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/001701**

| Patent document cited in search report | | | Publication date (day/month/year) | Patent family member(s) | | | Publication date (day/month/year) |
|---|---|---|---|---|---|---|---|
| JP | 2019-194572 | A | 07 November 2019 | CN | 108549370 | A | |
| JP | 2012-83294 | A | 26 April 2012 | (Family: none) | | | |
| JP | 2020-51898 | A | 02 April 2020 | (Family: none) | | | |
| JP | 2007-183032 | A | 19 July 2007 | (Family: none) | | | |
| JP | 2018-512076 | A | 10 May 2018 | US | 2016/0195602 | A1 | |
| | | | | paragraphs [0145]-[0147], fig. 3 | | | |
| | | | | WO | 2016/112037 | A1 | |
| | | | | EP | 3875981 | A2 | |
| | | | | CA | 2973006 | A1 | |

Form PCT/ISA/210 (patent family annex) (January 2015)